# EUROPÄISCHE PATENTSCHRIFT

(11) **EP 2 193 515 B1**
(45) Veröffentlichungstag und Bekanntmachung des Hinweises auf die Patenterteilung: **25.01.2017**
(21) Anmeldenummer: 08802297.5
(22) Anmeldetag: 17.09.2008
(51) Int. Cl.: G09F 3/00, B42D 25/47, C09J 7/02

(54) **SICHERHEITSELEMENT MIT TAMPER EVIDENT-EFFEKT**
SECURITY ELEMENTS WITH TAMPER EVIDENT EFFECT
ÉLÉMENT DE SÉCURITÉ À EFFET INDICATEUR D'ALTÉRATION ÉVIDENTE

(30) Priorität: 18.09.2007 DE 102007044482
(43) Veröffentlichungstag der Anmeldung: 09.06.2010
(73) Patentinhaber: Giesecke & Devrient GmbH, 81677 München (DE)
(72) Erfinder: RENNER, Patrick, 83677 Reichersbeuern (DE); HOFFMÜLLER, Winfried, 83646 Bad Tölz (DE)
(86) Internationale Anmeldenummer: PCT/EP2008/007773
(87) Internationale Veröffentlichungsnummer: WO 2009/036966

(56) Entgegenhaltungen:
- WO-A-02/081585
- WO-A-2006/113178
- US-A- 6 129 975
- US-B1- 6 361 889
- US-B1- 6 670 008

## Beschreibung

Die vorliegende Erfindung betrifft ein Sicherheitselement mit Tamper Evident-Effekt für ein Sicherheitspapier oder einen Wertgegenstand sowie ein Verfahren zur Herstellung des Sicherheitselements. Unter "Tamper Evident-Effekt" ist zu verstehen, dass Manipulationen an dem Sicherheitselement offensichtlich sind, d. h., das Sicherheitselement kann von dem gesicherten Gegenstand nicht entfernt werden, ohne dass eine sichtbare oder in sonstiger Weise nachweisbare Veränderung des Sicherheitselements und/ oder des gesicherten Gegenstands auftritt.

Die Erfindung betrifft außerdem ein Sicherheitspapier und ein Wertdokument mit dem erfindungsgemäßen Sicherheitselement und ein Verfahren zur Herstellung des Sicherheitspapiers und des Wertdokuments. Ferner betrifft die Erfindung ein Transferband mit einer Vielzahl von als Transferelement ausgebildeten erfindungsgemäßen Sicherheitselementen. Darüber hinaus betrifft die Erfindung die Verwendung des erfindungsgemäßen Sicherheitselements zur Produktsicherung von Waren jeglicher Art.

Wertgegenstände, wie etwa Markenartikel oder Wertdokumente, werden zur Absicherung oft mit Sicherheitselementen ausgestattet, die eine Überprüfung der Echtheit des Wertgegenstands gestatten und die zugleich als Schutz vor unerlaubter Reproduktion dienen. Wertgegenstände im Sinne der vorliegenden Erfindung sind insbesondere Banknoten, Aktien, Ausweise, Kreditkarten, Gesundheitskarten, Anleihen, Urkunden, Gutscheine, Schecks, hochwertige Eintrittskarten, aber auch andere fälschungsgefährdete Papiere, wie Pässe und sonstige Ausweisdokumente, sowie Produktsicherungselemente, wie Etiketten, Siegel, Verpackungen, hochwertige Produkte, wie Markenartikel und dergleichen. Der Begriff "Wertgegenstand" schließt im Folgenden alle derartigen Gegenstände, Dokumente und Produktsicherungsmittel ein. Unter "Sicherheitspapier" wird hingegen die noch nicht umlauffähige Vorstufe zu einem Wertdokument verstanden.

Häufig wird versucht, Sicherheitselemente zu manipulieren, sie beispielsweise von dem gesicherten Gegenstand abzulösen, um einen ungesicherten Gegenstand zu erhalten oder um das Sicherheitselement für einen anderen Gegenstand zu verwenden. Es ist daher zweckmäßig, Sicherheitselemente so auszubilden, dass derartige Manipulationen nicht unbemerkt bleiben.

Sicherheitselemente dieser Art sind bekannt. Beispielsweise offenbart die Anmeldung US 2005/0230961 A1 ein Tamper Evident-Etikett, das Schwachstellen aufweist, wie Perforationslinien, Faltungslinien oder Einschnitte. Das Etikett wird auf einen zu sichernden Gegenstand aufgeklebt und kann nicht mehr unversehrt entfernt werden, da es beim Versuch, es abzuziehen, an den Schwachstellen zerreißt.

EP 1 109 675 B1 offenbart ein Sicherheitselement, das eine Klebstoffschicht zum Verkleben mit einem zu schützenden Gegenstand und einen Sicherheitsdruck aufweist. Der Sicherheitsdruck enthält ein Pigment und eine Komponente, die sich in Lösungsmitteln, die den Klebstoff zu lösen vermögen, ebenfalls löst. Beim Ablösen des Sicherheitselements löst sich auch der Sicherheitsdruck und bildet sichtbare Flecken.

EP 1 569187 A1 offenbart ein Sicherheitsetikett mit einer Folienschicht, die auf einer Seite bedruckt oder bedruckbar ist und auf der anderen Seite eine Klebstoffschicht zum Verkleben mit einem Gegenstand aufweist. Zwischen der Folienschicht und der Klebstoffschicht befindet sich ein Aufdruck, der beim Abziehen des Etiketts von dem Gegenstand zusammen mit der Klebstoffschicht auf dem Gegenstand zurückbleibt.
WO 2005/119632 A1 offenbart ein Sicherheitsetikett mit einer Deckschicht, einer Kontaktklebstoffschicht, einer transparenten, mit fluoreszierender Tinte bedruckten Folie und einer Schicht aus einem starken Klebstoff, in der genannten Reihenfolge. Das Etikett wird mit einem zu schützenden Gegenstand verklebt, und der starke Klebstoff bewirkt, dass beim Abziehen des Etiketts nur die Deckschicht abgezogen werden kann, während die bedruckte Folie auf dem Gegenstand verbleibt.

DE 102 51 781 A1 offenbart ein Sicherheitselement mit einem Substrat mit beugungsoptisch wirksamen Oberflächenstrukturen, die bereichsweise mit Kleber aufgefüllt sind, wodurch eine Reflexionsschicht für die Beugungsstrukturen entbehrlich wird. Der Kleber verklebt das Substrat mit einem Träger, wobei sich in der Verklebungsebene sowohl Bereiche mit Kleber (verklebte Bereiche) als auch Bereiche ohne Kleber (unverklebte Bereiche) ergeben.

EP 0 253 089 B1 offenbart ein Sicherheitsdokument mit einer Deckschicht, einer Trägerschicht und einer dazwischen angeordneten Zwischenschicht, die optische Markierungen bedeckt und sich hinsichtlich Reflexionsvermögen oder Brechungsindex von der Deckschicht und der Trägerschicht unterscheidet. Deckschicht, Trägerschicht und Zwischenschicht sind miteinander verklebt oder verschweißt. Da die Zwischenschicht nur bereichsweise vorgesehen ist, gibt es Bereiche, in denen die Deckschicht und die Trägerschicht unmittelbar miteinander verbunden sind, sogenannte Haftbrücken. Wenn für die Deckschicht und die Trägerschicht gleiche Materialien verwendet werden, sorgt die unmittelbare Verbindung für eine besonders gute Haftung und beim Versuch des Ablösens für eine Zerstörung der Sicherheitsmarkierungen in der Nachbarschaft der Haftbrücken.

Nachteilig an dem genannten Stand der Technik ist die in vielerlei Hinsicht geringe Variabilität der Sicherheitselemente. Sie erfordern einen weitgehend definierten Aufbau, wobei die Manipulationsschutzmittel an einer bestimmten Stelle vorzusehen sind. Keines der offenbarten Sicherheitselemente ist universell zur Produktsicherung beliebiger Gegenstände anwendbar und gewährt Schutz gegen jede Art unbefugter Ablöseversuche, d. h. sowohl mechanisch als auch durch unterschiedlichste Lösungsmittel. Außerdem sind sie zum Teil aufwendig herzustellen oder müssen unmittelbar nach der Herstellung mit dem zu schützenden Gegenstand verklebt werden.

Sicherheitselemente gemäß dem Oberbegriff des Anspruchs 1 sind aus der US 6 361 889 B1 und aus der US 6129 975 A bekannt.

Sicherheitselemente mit einer Manipulationsschutzschicht in Form einer Außenschicht des Sicherheitselements sind aus der WO 2006/113178 A, der US 6 670 008 B1 und aus der WO 02/081585 A1 bekannt.

Aufgabe der vorliegenden Erfindung ist es, die Nachteile des Stands der Technik mindestens zum Teil zu vermeiden.

Aufgabe der vorliegenden Erfindung ist es daher insbesondere, ein Sicherheitselement mit Manipulationsschutzmitteln, d. h. Mitteln, die eine eventuelle Manipulation erkennbar machen, bereitzustellen, wobei die Manipulatonsschutzmittel ein hohes Ausmaß an Variabilität gestatten sollen. Ein hohes Ausmaß an Variabilität bedeutet, die erfindungsgemäßen Manipulationsschutzmittel sollten in dem Sicherheitselement an beliebiger Stelle vorgesehen werden können. Ein bestimmter Aufbau des Sicherheitselements sollte nicht erforderlich sein.

Das Sicherheitselement sollte ferner an Gegenständen mit beliebigen Oberflächen manipulationssicher anbringbar sein.

Weiterhin sollte das Sicherheitselement einfach herstellbar sein, ohne Veränderung der Manipulationsschutzeigenschaften lagerbar sein und auch bei längerem Gebrauch keine Veränderung der Manipulationsschutzeigenschaft zeigen.
Das Sicherheitselement sollte ferner als Transferelement ausbildbar sein. Außerdem sollte es auf einfache Weise mit dem zu schützenden Gegenstand verbunden werden können.

Aufgabe der vorliegenden Erfindung ist es auch, ein Sicherheitspapier, einen Wertgegenstand, Verfahren zur Herstellung des Sicherheitselements, des Sicherheitspapiers und des Wertgegenstands, und ein Sicherheitselement-Transferband bereitzustellen. Eine zu lösende Aufgabe besteht ferner in der Produktsicherung beliebiger Gegenstände.

Die Aufgabe wird gelöst durch das Sicherheitselement mit den Merkmalen des Hauptanspruchs. Ein Sicherheitspapier, ein Wertgegenstand, Verfahren zur Herstellung des Sicherheitselements, des Sicherheitspapiers und des Wertgegenstands sowie ein Transferband mit den erfindungsgemäßen Sicherheitselementen und die Verwendung der Sicherheitselemente zur Produktsicherung sind Gegenstand der nebengeordneten Ansprüche. Spezielle Ausführungsformen der Erfindung sind Gegenstand der abhängigen Ansprüche.

Die erfindungsgemäßen Sicherheitselemente weisen typischerweise einen Schichtaufbau aus mehreren Schichten, bevorzugt aus vielen Schichten, auf. Prinzipiell kann der "Schichtaufbau" jedoch auch nur aus einer Funktionsschicht, beispielsweise einer Folie mit Fluoreszenzpigmenten, bestehen. Nachfolgend wird die vorliegende Erfindung anhand von Sicherheitselementen mit Mehrschichtaufbau beschrieben, da anhand des Mehrschichtaufbaus die Vielseitigkeit der Erfindung deutlicher wird. Die beschriebenen Aufbauten und Schichtfolgen sind jedoch lediglich beispielhaft, nicht beschränkend, zu verstehen, und die vorliegende Erfindung ist auch auf beliebige andere Sicherheitselemente mit anderen Arten von Schichten und Schichtfolgen anwendbar.

Kern der vorliegenden Erfindung ist die Manipulationsschutzschicht. Die Manipulationsschutzschicht ist eine klebefähige Schicht, die sich zwischen zwei Schichten des Schichtaufbaus des Sicherheitselements erstreckt. Sie ist also eine Zwischenschicht innerhalb des Schichtaufbaus des Sicherheitselements.

Die Manipulationsschutzschicht hat im Wesentlichen dieselbe flächenmäßige Ausdehnung wie die Schichten des Sicherheitselements und besitzt über ihre gesamte flächenmäßige Ausdehnung eine im Wesentlichen gleiche Dicke. "Im Wesentlichen gleiche Dicke" bedeutet, Dickenschwankungen sind so gering, dass eine vollflächige Verklebung der angrenzenden Schichten, d. h. ohne störende verklebungsfreie Bereiche, gewährleistet ist. In Richtung ihrer flächenmäßigen Ausdehnung setzt sich die Manipulationsschutzschicht aus mindestens zwei, bevorzugt mehreren Bereichen zusammen, die sich in mindestens einer physikalischen Eigenschaft voneinander unterscheiden. Unter physikalischer Eigenschaft wird im Rahmen dieser Anmeldung eine Eigenschaft verstanden, die messbar ist und somit innerhalb einer möglichen physikalischen Theorie beschrieben und durch ein Experiment beobachtet werden kann. Dieses Verständnis einer physikalischen Eigenschaft entspricht der auf der Internetseite "http://de.wikipedia.org/wiki/Physikalische_Eigenschaften" gegebenen Definition.

Die Bereiche können beliebig geformt sein, beispielsweise ein Streifenmuster, eine bildliche Darstellung oder numerische Zeichen bilden. In Dickenrichtung sind die physikalischen Eigenschaften der einzelnen Bereiche jeweils bevorzugt identisch, d. h., die physikalischen Eigenschaften der Manipulationsschutzschicht wechseln in Flächenrichtung, bevorzugt aber nicht in Dickenrichtung.

Die physikalischen Eigenschaften, in denen sich die einzelnen Bereiche der Manipulationsschutzschicht unterscheiden, sind erfindungsgemäß Klebefähigkeit, Lösungsmittelbeständigkeit, Aushärtungsgrad und thermoplastische Eigenschaften. Bevorzugt unterscheiden sich die Schichten in mehreren physikalischen Eigenschaften gleichzeitig.

Unter Klebefähigkeit ist die Haftkraft zu verstehen, mit der die Manipulationsschutzschicht an den an sie angrenzenden Schichten haftet. Unterschiedliche Lösungsmittelbeständigkeit bedeutet unterschiedliche Löslichkeit in organischen, wässrigen und/oder sonstigen Lösungsmitteln. Unterschiedlicher Aushärtungsgrad bedeutet, dass die Manipulationsschutzschicht Bereiche aufweist, die nach Bestrahlung und/ oder thermischer Behandlung unterschiedlich stark vernetzt sind. Die unterschiedliche Aushärtung bedeutet in der Regel gleichzeitig auch eine unterschiedliche Klebefähigkeit, unterschiedliche thermoplastische Eigenschaften und unterschiedliche Lösungsmittelbeständigkeit.

Die in Flächenrichtung unterschiedlichen Eigenschaften können erreicht werden, indem man die Manipulationsschutzschicht "patchwork-artig" aus unterschiedlichen Materialien zusammensetzt, beispielsweise aus zwei oder mehr Klebstoffen unterschiedlicher Wasserlöslichkeit, aus zwei oder mehr Klebstoffen unterschiedlicher Löslichkeit in protischen und/ oder aprotischen organischen Lösungsmitteln, aus einem oder mehreren wasserlöslichen Klebstoffen in Kombination mit einem oder mehreren in organischen Lösungsmitteln löslichen Klebstoffen, etc. Es werden mehrere durch Strahlung härtbare Klebstoffe gemeinsam verwendet.

Allgemein ist anzumerken, dass neben Klebstoffen unterschiedlicher Wasserlöslichkeit auch Klebstoffe mit unterschiedlicher Dispergierbarkeit oder aber Klebstoffe eingesetzt werden können, deren Wasserlöslichkeit und Dispergierbarkeit vom pH-Wert und/ oder der Polarität der Klebstoffe abhängt.

Die Klebstoffe mit unterschiedlicher Wasserlöslichkeit sind mit Vorteil ausgewählt aus der Gruppe, bestehend aus Acrylatharzen, Urethanharzen, Maleinatharzen, Kunstharzen, Polyesterharzen und/ oder sonstigen carboxylfunktionalen Harzen, deren verseiften und/ oder veresterten Derivaten und/ oder hydroxylhaltigen Verbindungen. Andererseits sind die Klebstoffe mit unterschiedlicher Löslichkeit in organischen Lösungsmitteln bevorzugt ausgewählt aus der Gruppe, die besteht aus Cellulosederivaten, wie Nitrocellulose, Ethylcellulose, Celluloseacetopropionat und Celluloseacetobutyrat, Vinylpolymerisaten, Polyamiden, Polyurethanen, Ketonharzen, PET-Harzen und/ oder Kunstharzen.

Im Zusammenhang mit den vorstehenden Ausführungen zur Löslichkeit der Klebstoffe in bestimmten Lösungsmitteln ist anzumerken, dass auch Klebstoffe mit im Wesentlichen gleicher Löslichkeit in einem Lösungsmittel, aber unterschiedlichen thermoplastischen Eigenschaften für die wenigstens zwei Bereiche der erfindungsgemäßen Manipulationsschutzschicht eingesetzt werden können. Die unterschiedlichen Klebstoffe der wenigstens zwei Bereiche der Manipulationsschutzschicht unterscheiden sich in einem solchen Fall zumindest durch ihre thermoplastischen Eigenschaften, aber nicht oder nicht wesentlich durch ihre Löslichkeit in einem bestimmten Lösungsmittel.

Grundsätzlich gilt: Je mehr unterschiedliche Eigenschaften, d. h. unterschiedliche Materialien und/ oder unterschiedliche Aushärtungsgrade, miteinander kombiniert werden, desto höher ist die Sicherheit gegen unerlaubte Manipulationen an dem Sicherheitselement. Es ist daher vorteilhaft, mehrere Materialien mit unterschiedlichen physikalischen Eigenschaften miteinander zu kombinieren, beispielsweise ein Material, das in wässrigen, nicht aber in organischen Lösungsmitteln löslich ist, ein Material, das in bestimmten organischen, nicht aber in wässrigen Lösungsmitteln löslich ist, und ein strahlenhärtbares Material.

Bereiche unterschiedlicher Haftkraft verhindern ein mechanisches Abziehen des Sicherheitselements, Bereiche unterschiedlicher Lösungsmittelbeständigkeit verhindern ein Ablösen des Sicherheitselements durch Lösungsmittel, unterschiedlich stark ausgehärtete Bereiche bzw. unterschiedlich thermoplastische Bereiche verhindern ein Ablösen des Sicherheitselements durch Erwärmen oder durch Abziehen. Zumindest ist eine Entfernung des Sicherheitselements vom Substrat nicht möglich, ohne dass die Manipulation in irgendeiner Weise festgestellt werden könnte. Manipulationsversuche führen stets zu einer unmittelbar visuell erkennbaren oder in anderer Weise nachweisbaren Veränderung des Sicherheitselements und/ oder des Substrats. "Veränderung" heißt im Rahmen dieser Anmeldung, das Sicherheitselement und/ oder das Substrat werden beim Entfernungsversuch des Sicherheitselements beschädigt, beispielsweise durch Einreißen, oder die Entfernung des Sicherheitselements gelingt zwar scheinbar, es bleiben aber dennoch Spuren des Sicherheitselements auf dem Substrat zurück, die entweder mit dem bloßen Auge, zumindest aber mit geeigneten Hilfsmitteln nachweisbar sind. Derartige Spuren könnten Farbstoffe sein, die in der Manipulationsschutzschicht oder zumindest in den Bereichen der Manipulationsschutzschicht mit besserer Haftkraft enthalten sind, oder IR- oder UV-Fluoreszenzfarbstoffe oder thermochrome Materialien, deren Vorhandensein nur bei geeigneter Bestrahlung oder Temperaturveränderung erkennbar wird.

Als Materialien für die Manipulationsschutzschicht werden bevorzugt thermoplastische, heißsiegelfähige Klebstoffsysteme verwendet, im folgenden "Heißsiegelkleber" genannt. Die Heißsiegelfähigkeit ist keine zwingende Bedingung, sie ist jedoch bevorzugt, weil die Aufbringung von Sicherheitselementen auf zu schützende Gegenstände durch Heißsiegeln praktisch und verfahrensmäßig relativ einfach ist.

Im Folgenden werden einige Ausführungsformen der vorliegenden Erfindung, ihre Herstellung, und bevorzugte Materialien genauer beschrieben.

Gemäß einer Variante der vorliegenden Erfindung wird die Manipulationsschutzschicht aus einem strahlenhärtbaren Heißsiegelkleber hergestellt.

Beim Aufbringen von Sicherheitselementen mithilfe von Heißsiegelklebern wird mindestens eines der zu verbindenden Substrate mit einer Polymerlösung auf Lösungsmittelbasis oder einer wässrigen Lösung oder Dispersion eines Polymers beschichtet. Nach physikalischer Trocknung, bevorzugt bei erhöhter Temperatur, besonders bevorzugt bei etwa 60 °C bis 90 °C, liegt eine siegelfähige Masse vor, die bei Einwirkung von Druck und erhöhter Temperatur, beispielsweise etwa 100 °C bis 160 °C, als Klebstoff wirkt. Die Temperatur, bei der der Heißsiegelvorgang durchgeführt wird, wird im Weiteren als "Heißsiegeltemperatur" bezeichnet. Sogenannte Schmelzklebstoffe werden ohne Lösungsmittel bzw. Dispersionsmittel aufgetragen. Nach dem Abkühlen bilden sie eine feste Beschichtung, die bei erneuter Erwärmung und Druckeinwirkung als Klebstoff wirkt.

Erfindungsgemäß werden zur Ausbildung der Manipulationsschutzschicht(en) bevorzugt Heißsiegelkleber verwendet, insbesondere solche, die nach dem physikalischen Trocknen bzw. nach dem Erkalten (Schmelzklebstoffe) unterhalb der Heißsiegeltemperatur, besonders bevorzugt bei Raumtemperatur im Wesentlichen tackfreie Beschichtungen bilden.

Im Rahmen der vorliegenden Erfindung bedeutet der Begriff "im Wesentlichen tackfrei" auch im Wesentlichen klebfrei im Sinne einer glatten, im Wesentlichen nicht klebrigen Oberfläche. Die Überprüfung kann dabei durch folgenden Test erfolgen: beschichtete Folienstücke von etwa 100 cm² werden gestapelt und mit einem Gewicht von 10 kg belastet und 72 Stunden lang bei 40 °C gelagert. Lassen sich die Folienstücke danach ohne Beschädigung der Beschichtungen mühelos voneinander trennen, ist die Beschichtung als im Wesentlichen tackfrei anzusehen.

Tackfreiheit bzw. Klebfreiheit unterhalb der Heißsiegeltemperatur bzw. bei Raumtemperatur ist insbesondere dann wichtig, wenn die Manipulationsschutzschicht eine Außenschicht der Sicherheitselemente ist, und die Sicherheitselemente nicht unmittelbar nach ihrer Herstellung weiter verarbeitet, sondern gelagert werden sollen, was ein Aufwickeln von Sicherheitselement-Bahnen oder ein Stapeln von Sicherheitselementen erfordert. Eine nicht tackfreie Manipulationsschutzschicht hingegen als Außenschicht würde zu einem Verblocken der Sicherheitselemente bzw. der Sicherheitselement-Bahnen führen. Ist die Manipulationsschutzschicht keine Außenschicht eines Sicherheitselements, sondern eine Zwischenschicht, können auch nicht tackfreie Klebstoffe ohne Weiteres verwendet werden.

Der Heißsiegelkleber gemäß der ersten Variante der vorliegenden Erfindung enthält mindestens eine strahlenvernetzbare Komponente. Die Anwesenheit der strahlenvernetzbaren Komponente in der Manipulationsschutzschicht erlaubt es, nach der Aufbringung der Manipulationsschutzschicht eine Vernetzung durch Bestrahlung durchzuführen, bevorzugt nach physikalischer Trocknung der Manipulationsschutzschicht. Durch die Vernetzung entsteht ein hochschmelzendes bzw. unschmelzbares System. Der erzielbare Vernetzungsgrad ist abhängig von der Anzahl reaktiver Gruppen in der vernetzbaren Komponente oder in den vernetzbaren Komponenten, dem Gehalt und der Art des eingesetzten Photoinitiators bzw. der eingesetzten Photoiniatoren sowie von der Dauer und der Intensität der Bestrahlung. Die Vernetzung verbessert die Haftung der vernetzten Bereiche der Manipulationsschutzschicht an den angrenzenden Schichten und erhöht die innere Festigkeit der vernetzten Bereiche der Manipulationsschutzschicht und verringert gleichzeitig ihre Löslichkeit und ihre thermoplastischen Eigenschaften, d. h., die vernetzten Bereiche der Manipulationsschutzschicht können nicht mehr oder nur schwer erweicht oder durch Lösungsmittel gelöst werden.

Erfindungsgemäß wird nicht die gesamte Manipulationsschutzschicht gleichmäßig vernetzt, sondern es werden Bereiche unterschiedlicher Vernetzung, d. h. unterschiedlicher Aushärtung erzeugt. Dazu wird die Manipulationsschicht nur in vorbestimmten Bereichen bestrahlt, während andere Bereiche unbestrahlt bleiben oder gegebenenfalls geringerer Bestrahlung ausgesetzt werden. An den weniger oder gar nicht bestrahlten und deshalb weniger oder gar nicht ausgehärteten Stellen verhält sich der Kleber der Manipulationsschutzschicht wie ein herkömmlicher thermoplatischer Heißsiegelkleber. Er bleibt dort bei relativ geringen Temperaturen thermoplastisch, wasserempfindlich und lösungsmittelempfindlich. In den ausgehärteten Bereichen ist der Kleber praktisch nicht mehr thermoplastisch und besitzt eine sehr hohe Lösungsmittelbeständigkeit und Beständigkeit gegen wässrige Lösungen.

Durch die unterschiedlich starke Bestrahlung erhält man in Erstreckungsrichtung der Manipulationsschutzschicht Bereiche mit stark unterschiedlichen Härten, thermoplastischen Eigenschaften, Haftungseigenschaften und Beständigkeiten gegen organische Lösungsmittel und gegen Wasser, und damit die Voraussetzungen für Tamper Evident-Effekte. Färbt man die strahlenvernetzbare Manipulationsschutzschicht bzw. den strahlenvernetzbaren Heißsiegelkleber mit Farbstoffen, Bunt- oder Effektpigmenten (z. B. fluoreszierend, thermochrom) ein oder mischt den Kleber mit maschinell nachweisbaren Sicherheitsmerkmalen, wie beispielsweise Magnetpartikeln, so erhält man beim Ablöseversuch mit Lösungsmitteln oder Kochwasser oder beim mechanischen Abziehen im Idealfall auf dem Substrat das Muster der Bereiche mit guter Aushärtung und damit entsprechend bei Tageslicht, unter UV-Licht oder bei Temperaturänderung sichtbar den Nachweis eines Manipulationsversuchs bzw. den maschinell erbringbaren Nachweis eines Manipulationsversuches. Derartige visuell erkennbare und/ oder maschinell nachweisbare Sicherheitsmerkmale in der Manipulationsschutzschicht können die einzigen Sicherheitsmerkmale der erfindungsgemäßen Sicherheitselemente darstellen oder als zusätzliche Sicherheitselemente, speziell zur Kenntlichmachung der Manipulation, dienen.

Die erfindungsgemäß für die Manipulationsschutzschicht verwendeten strahlenvernetzbaren Klebstoffsysteme sind bevorzugt durch UV-, IR-Strahlung, kurzwelliges sichtbares Licht oder Elektronenstrahlung vernetzbar, besonders bevorzugt durch UV- oder Elektronenstrahlung vernetzbar (UV-/IR-Strahlung und sichtbares Licht werden als Lichtstrahlung bezeichnet).

Kationisch, anionisch oder radikalisch vernetzbare Systeme können auch durch Erwärmen gehärtet (vernetzt) werden. In diesem Zusammenhang wird auch von einer thermischen Aktivierung (Vernetzung) der radikalisch oder ionisch aushärtbaren Systeme gesprochen.

Als Strahlenquellen für die Vernetzung durch Strahlung werden bevorzugt übliche UV-Strahler (dotiert oder undotiert, z. B. Hg- und Fe-Strahler) oder bevorzugt UV-Leuchtdioden, Elektronenstrahler und Excimer-Laser eingesetzt.

Die strahlenvernetzbaren Heißsiegelkleber sind typischerweise hochmolekulare, bei Raumtemperatur idealerweise feste, oligomere Verbindungen, z. B. Acrylate, die in Wasser oder organischen Lösungsmitteln gelöst oder dispergiert, d. h. emulgiert oder suspendiert, werden können. Die Lösungen, Emulsionen, Suspensionen werden auf eine Schicht des Sicherheitselementaufbaus aufgetragen, entweder unmittelbar oder nach Druckvorbehandlung oder nach Behandlung der Trägerschicht der Manipulationsschutzschicht mit Primer.

Generell können kationisch, anionisch, nicht ionisch und radikalisch härtende Systeme verwendet werden. Besonders vorteilhaft sind dabei Acrylsäureester, Vinylether, Epoxide und Polyole. Unter bestimmten Bedingungen kann auch thermisch, gegebenenfalls ausschließlich thermisch, gehärtet werden. Bei Lichthärtung müssen die Heißsiegelkleber-Systeme Photoinitiatoren enthalten, bei Elektronenstrahlhärtung jedoch nicht. Auch bei ionisch härtenden Systemen, die thermisch vernetzt werden, sind keine Photoinitiatoren erforderlich. Ein Vorteil fehlender Photoinitiatoren ist, dass eine spätere Nachvernetzung beim Gebrauch des Gegenstands ausgeschlossen ist.

Geeignete strahlenhärtende Systeme sind Dispersionen, die ausgewählt sind aus der Gruppe, die aus aliphatischen Polyurethandispersionen, aromatischen Polyurethandispersionen, Acrylaten, anionischen acrylatmodifizierten Polyurethandispersionen, Polyurethan-Polyetheracrylaten und deren Gemischen besteht.

Besonders gut geeignet sind acrylierte Polyurethandispersionen. Als Beispiele solcher acrylierten Polyurethandispersionen sind DW7770, DW7773, DW7825, DW7772, DW7849 (UCB, Suface Specialties) und Actilane 340 Epoxynovolacacrylat in Butoxyethylacetat (Akzo) zu nennen.
Weitere strahlenhärtbare Dispersionen sind beispielsweise NeoRad R-440 (NeoResins), NeoRad R-441 (NeoResins), NeoRad-R 445 (NeoResins), Laromer LR 8949 (BASF), Laromer LR 8983 (BASF), Laromer LR 9005 (BASF) LUX 101 UV-Dispersion (Alberdingk), LUX 241 UV-Dispersion (Alberdingk), LUX 308 UV-Dispersion (Alberdingk), LUX 352 UV-Dispersion (Alberdingk), LUX 370 UV-Dispersion (Alberdingk), LUX 390 UV-Dispersion (Alberdingk), LUX 399 UV-Dispersion (Alberdingk), LUX 331 UV-Dispersion (Alberdingk), LUX 338 UV-Dispersion (Alberdingk), Halwedrol UV 95/92 W (Hüttenes-Albertus), Halwedrol UV 14/40 W (Hüttenes-Albertus), Halwedrol UV-TN 6711/40 W (Hüttenes-Albertus), Halwedrol UV 65/40 W (Hüttenes-Albertus), Halwedrol UV-TN 7561-3/40 W (Hüttenes-Albertus), Halwedrol UV-TN 7157/40 W (Hüttenes-Albertus) und Bayhydrol UV VP LS 2280 (Bayer).

Unter den genannten Dispersionen befinden sich anionische und nicht ionische Dispersionen. Bei den meisten dieser Dispersionen handelt es sich um aliphatische Polyurethandispersionen (z. B. aliphatische Polyesterpolyurethane), daneben aber auch um aromatische Polyurethandispersionen und Copolymere (z. B. Dispersionen auf Basis von aliphatischen Polyurethanund Acrylsäureester-Copolymeren), um Acrylate (Acrylsäureester-Copolymere) sowie anionische acrylatmodifizierte UV-härtende Polyurethandispersionen oder auch Polyurethan-Polyetheracrylate.

Bevorzugt liegt der Festkörperanteil der Dispersion zwischen 30 Gew.-% und 60 Gew.-%, vorzugsweise zwischen 35 Gew.-% und 50 Gew.-%. Durch Verdünnen kann der Festkörpergehalt aber nach Bedarf eingestellt werden.

Handelsübliche Dispersionen weisen einen Festkörpergehalt zwischen 38 Gew.-% und 51 Gew.-% auf. Aufgrund der einfachen Verfügbarkeit werden solche Dispersionen im Rahmen der vorliegenden Erfindung bevorzugt.

Zur Initiierung der Lichthärtung sind im Allgemeinen Photoinitiatoren erforderlich. Daher enthalten zumindest die Bereiche der Manipulationsschutzschicht, die nach anionischen, nicht ionischen, kationischen oder radikalischen Mechanismen durch Licht gehärtet werden sollen, mindestens einen geeigneten Photoinitiator. Die Vernetzung kann mithilfe eines Photoinitiators auf besonders einfache Weise gestartet und kontrolliert werden. Bevorzugte Beispiele solcher Photoinitiatoren sind Darocur 4265 (Ciba), Darocur 1173 (Ciba), Irgacure 500 (Ciba), Irgacure 184 (Ciba), Esacure KIP 100 F (Lamberti), Irgacure 2959 (Ciba), Irgacure 819 DW (Ciba) und Lucirin TPO (BASF), UVI-6992 (Dow Chemical Company), Omnicat 440 (IGM).

Besonders gut geeignete kationisch strahlenhärtende Heißsiegelkleber enthalten epoxidmodifizierte Vinyl-Copolymere. Ein Beispiel für ein epoxidmodifiziertes Vinyl-Copolymer ist UCAR VERR-40 (The Dow Chemical Company). Ein kationisch härtendes UV-Lacksystem ist ISS 1202 (Herberts).

Die Erzeugung von Bereichen unterschiedlicher Aushärtung kann erfolgen, indem man die Manipulationsschutzschicht durch eine Maske hindurch bestrahlt, die die Strahlung absorbiert oder reflektiert, oder indem man eine Strahlungsquelle verwendet, mit der sich das gewünschte Muster aus gehärteten Bereichen "zeichnen" lässt, d. h. mit der man ausgewählte Bereiche gezielt bestrahlen kann. Eine gezielte Bestrahlung ist mittels Laser oder Elektronenstrahlung möglich, wobei die Elektronenbestrahlung bevorzugt durch eine Maske hindurch durchgeführt wird. Die Aushärtung findet dann nur in den bestrahlten Bereichen statt.
Alternativ lassen sich Bereiche unterschiedlicher Aushärtung erzielen, indem man, abhängig von dem gewünschten Aushärtungsmuster, zwei oder auch mehr Heißsiegelkleber mit unterschiedlichen Härtungseigenschaften verwendet. Unterschiedliche Härtungseigenschaften können beispielsweise erreicht werden, indem man verschiedene Heißsiegelkleber aufbringt oder indem man zwar nur einen einzigen Heißsiegelkleber aufbringt, der jedoch in manchen Bereichen einen Photoinitiator enthält, in anderen Bereichen nicht. Man kann beispielsweise einen photoinitiatorhaltigen thermoplastischen Kleber motivabhängig aufdrucken und vorzugsweise registergenau dazwischen oder auch in einem dünnen Auftrag vollflächig darüber photoinitiatorfreien thermoplastischen Kleber aufdrucken. Wenn die photoinitiatorfreie Schicht sehr dünn (und strahlenhärtbar) ist, wird sie in den die photoinitiatorhaltigen Bereiche überlappenden Bereichen mit ausgehärtet, während die übrigen Bereiche des photoinitiatorfreien Klebers nicht härten. Ein wesentlicher Vorteil bei diesem Aufbau ist, dass neben dem Verzicht auf eine Maske auch ein Nachvernetzen der Manipulationsschutzschicht im Verlauf der späteren Gebrauchsdauer des geschützten Gegenstandes nicht möglich ist. Die Variante, photoinitiatorhaltige und photoinitiatorfreie Bereiche vorzusehen und ohne Maske zu bestrahlen, funktioniert bei Lichthärtung, nicht aber bei Härtung durch Elektronenbestrahlung, da bei Elektronenbestrahlung keine Photoinitiatoren zur Härtung erforderlich sind.

Die UV-Belichtung kann über ein gezieltes "Flackern" der Strahler quasi eine Maske erzeugen. Dazu ist ein spezielles Vorschaltgerät notwendig. Das Vorschaltgerät muss nämlich in der Lage sein, in Abhängigkeit von einem zwangsläufig vorgegebenen, streifenförmigen Motiv, periodisch oder auch aperiodisch Spannung zu liefern, um eine UV-Lampe in schneller, alternierender Abfolge mit nahezu 100 % und vorzugsweise nahezu 0 % versorgen zu können. Man würde für eine so geschaltete UV-Lampe dann ein "Flackern" wahrnehmen. Bei Verwendung einer solchen "Masken"-Lampe ist eine Relativbewegung von Lampe und zu belichtendem Sicherheitselement erforderlich. In der Praxis wird eine solche Relativbewegung dadurch erreicht, dass sich das zu belichtende Material bei feststehender "Masken" - Lampe bewegt. Vorstellbar ist aber auch, einen hohlen rotierenden Zylinder mit z. B. Streifenmotiv (alternierende Anordnung von UV-durchlässigen und UV-undurchlässigen Stellen) um eine UV-Lampe rotieren zu lassen. Die UV-Lampe ist dann im Inneren eines Rotationszylinders stationär angeordnet und wird bei konstanter Spannung betrieben.

Da Sicherheitselemente typischerweise einen Schichtaufbau aufweisen, der unter anderem Schichten enthält, die bestimmte Lichtstrahlung (UV, IR, sichtbares Licht) mehr oder weniger stark absorbieren und/ oder reflektieren, können diese Schichten, sofern die Belichtung durch den Schichtaufbau hindurch erfolgt (Vorderseitenbelichtung), als "interne Masken" verwendet werden.

Sogenannte LEAD (Longlasting Economical Anticopy Device)-Sicherheitselemente beispielsweise haben einen Schichtaufbau, der eine UV-Prägelackschicht (holographisches Sicherheitsmerkmal), Schichten mit farbstoffhaltigen und pigmentierten Druckfarben, gegebenenfalls Prägefolien, die UV-Strahlung absorbieren, sowie eine PVD-Schicht (z. B. aus Al, Cr, Cu, Bimetall, CS, Metallicfarben), die UV-Strahlung reflektiert, aufweist. Insbesondere Schwarzdruck oder metallische Schichten, besonders wenn mehrere dieser Schichten in Schichtaufbau übereinander liegen, bewirken einen starken Verlust an Strahlungsintensität. Bei einer Bestrahlung durch den Schichtaufbau hindurch dringt an diversen Stellen in Abhängigkeit von der eingebrachten Strahlungsdosis und der gewählten Wellenlänge kaum noch Strahlung durch den Aufbau, die Aushärtung des Heißsiegelklebers ist unzureichend bzw. kann an diesen Stellen nicht erfolgen. Diese Schichten zwischen Strahlungsquelle und Heißsiegelkleber können somit als Maske dienen, um einen Tamper Evident-Effekt zu erhalten. In diesem Fall kann das Tamper Evident-Motiv natürlich nicht frei gewählt werden, sondern ist abhängig von dem Muster, das die reflektierenden/ absorbierenden Substanzen in dem Schichtaufbau bilden. Bei bestimmten Wellenlängen können auch diese Maskenschichten eine gewisse Transmission und Durchstrahlbarkeit aufweisen. Im Allgemeinen kann man die vorstehend beschriebenen Maskenschichten im Wellenlängenbereich von 200 nm bis 800 nm aber als im Wesentlichen lichtundurchlässig bezeichnen, da die Transmission im gesamten Wellenlängenbereich unter 1 % liegt.

Es ist auch möglich, eine Maske mit einer transparenten Lack- bzw. PrimerSchicht, die einen hohen Anteil an einer strahlungsabsorbierenden oder -reflektierenden Substanz, z. B. einen UV-Absorber, enthält, aufzubringen. So lässt sich eine unsichtbare Maske einbringen, und man muss die sichtbaren Motive nicht mit dem Motiv des gewünschten Tamper Evident-Effekts abstimmen. Je nach Verteilung der strahlungsabsorbierenden oder -reflektierenden Substanzen in der unsichtbaren Maskenschicht erhält man Bereiche unterschiedlicher Aushärtung, und die Maske ist bei gewöhnlicher Betrachtung nicht erkennbar.

Alternativ kann natürlich auch durch eine externe Maske hindurch bestrahlt werden.

Die Bestrahlung durch den Schichtaufbau des Sicherheitselements hindurch ist unabhängig davon möglich, ob es sich bei der Manipulationsschutzschicht um eine strahlenvernetzbare Zwischenschicht in dem Schichtaufbau oder um eine strahlenhärtbare Heißsiegelkleberschicht zur Verklebung mit einem Wertdokument oder mit einem anderen zu schützenden Gegenstand handelt.

Anstatt durch den Schichtaufbau des Sicherheitselements hindurch kann die Bestrahlung auch von der Heißsiegelseite des Sicherheitselements her durchgeführt werden (Rückseitenbestrahlung). Hier muss im Regelfall eine externe Maske vorgeschaltet werden, sofern nicht mit einer Strahlenquelle bestrahlt wird, die motivabhängig bestrahlen kann, wie Laser und Elektronenstrahlen, oder die Manipulationsschutzschicht motivabhängig aus unterschiedlichen Klebersystemen, die unterschiedliche Aushärtungseigenschaften haben, zusammengesetzt wird. Unterschiedliche Aushärtungseigenschaften können sich dadurch ergeben, dass die verwendeten Klebersysteme eine unterschiedliche Anzahl an funktionellen Gruppen haben oder dass Bereiche mit Photoinitiator und Bereiche ohne Photoinitiator vorgesehen werden.

Eine geeignete externe Maske (Maskenband) ist in der WO 2005/006075 A1 offenbart. In der Druckschrift wird die Maske speziell im Zusammenhang mit Elektronenbestrahlung beschrieben. Die Maske sowie das Bestrahlungsverfahren sind jedoch allgemein anwendbar und auch zur Bestrahlung mit Licht geeignet. Die Bestrahlung der erfindungsgemäßen Manipulationsschutzschicht kann dementsprechend durchgeführt werden, wie es in WO 2005/006075 A1 beschrieben ist.

Die erfindungsgemäße Manipulationsschutzschicht ist eine Zwischenschicht im Schichtaufbau des Sicherheitselements ist. Sie wird bevorzugt, aber nicht zwingend, mittels Bestrahlung durch den Schichtaufbau des Sicherheitselements hindurch ausgehärtet. Wenn die Manipulationsschutzschicht die Heißsiegelkleberschicht ist, wird sie bevorzugt durch rückseitige Bestrahlung ausgehärtet. Wenn das Sicherheitselement mehrere erfindungsgemäße Manipulationsschutzschichten enthält, eine Zwischenschicht und eine Heißsiegelschicht zur Verklebung mit dem Substrat, ist es sinnvoll, die Zwischenschicht von der Vorderseite des Sicherheitselements her, d. h. durch den Schichtaufbau hindurch, und die Verklebungsschicht von der Heißsiegelseite her, d. h. von der Rückseite des Sicherheitselements her, zu bestrahlen.

Als externe Maske für eine rückseitige Bestrahlung des erfindungsgemäßen Sicherheitselements kann auch der zu schützende Gegenstand verwendet werden. Dies ist insbesondere dann möglich, wenn es sich bei dem Substrat, d. h. dem zu schützenden Gegenstand, um Papier oder um Kunststofffolien handelt. Derartige Substrate lassen oft Strahlung nicht über ihre ganze Fläche hinweg gleichmäßig durch, sondern weisen Bereiche besserer und Bereiche schlechterer Strahlungstransmission auf.

Papier beispielsweise enthält oft UV-Strahlen absorbierende Substanzen, z. B. TiO₂ , oder es ist in unterschiedlichen Bereichen unterschiedlich dick. Dadurch wird, wenn zuerst das Sicherheitselement mit dem Substrat verklebt wird und dann durch das Substrat hindurch bestrahlt wird, bereichsabhängig unterschiedlich viel Strahlung durch das Papier zu der Manipulationsschutzschicht hindurch gelassen, und somit werden in der Manipulationsschutzschicht unterschiedlich stark ausgehärtete Bereiche erzeugt.

Solche Bereiche unterschiedlicher Strahlungstransmission können in Papier- oder Kunststoffsubstraten auch durch pigmentierte Aufdrucke, Metallisierungen, lokale Zwischenschichten (z. B. zusätzliche Sicherheitselemente) zwischen den Substratschichten, etc., welche die zur Aushärtung verwendete Strahlung absorbieren und/ oder reflektieren, erzeugt werden. Insbesondere Wasserzeichen in Papieren bieten sich als Maske an. Ist im Heißsiegelbereich eines Sicherheitselements, beispielsweise eines LEAD-Streifens, ein Wasserzeichen mit einem bestimmten Motiv hinterlegt, so führt dies zu einer Aushärtung des strahlenvernetzbaren Heißsiegelklebers in Form des Motivs. Ideal ist, dass die Aushärtung und damit die Haftung an den dünnsten Stellen des Papiers am besten sein wird. So lange keine Manipulation stattfindet, werden die Schwachstellen im Papier durch das Sicherheitselement stabilisiert und geschützt. Eine Manipulation bzw. ein Ablöseversuch führt zu einer Zerstörung des Papiers.

Eine weitere Möglichkeit besteht darin, unter den strahlenvernetzbaren Heißsiegelkleber einen Papierprimer oder einen anderen beliebigen Lack oder eine beliebige Farbe, der (die) die Aushärtungsstrahlung absorbiert und/oder reflektiert, in Form eines gewünschten Motivs zu drucken. Auch hierdurch erhält man bei einer Rückseitenbelichtung Bereiche mit unterschiedlicher Aushärtung.

Das gleiche Ergebnis erzielt man, wenn man den strahlenhärtenden Papierprimer oder den Lack/ die Farbe nicht auf den Heißsiegelkleber, sondern auf das Papier aufbringt, vorzugsweise aufdruckt. Derartige Aufdrucke können, mit Ausnahme des Primer-Aufdrucks, auch auf der Gegenseite des Papiers oder der Folie (der Seite des Papiers oder der Folie, die nicht mit dem Sicherheitselement verklebt wird) in dem Bereich, in dem das Sicherheitselement appliziert wird, vorgesehen werden.

Durch jede dieser Maßnahmen kann durch Bestrahlung von der Rückseite des zu schützenden Gegenstands her eine ortsaufgelöste Vernetzung erzielt und damit ein Tamper Evident-Merkmal geschaffen werden.

Speziell bei Papier bietet sich eine weitere Möglichkeit, das Substrat selbst als Maske zu verwenden. Nasses Papier ist transparenter als trockenes Papier, weshalb durch Befeuchtung die Transparenz für die Vernetzungsstrahlung erhöht werden kann. Um eine strahlenvernetzbare Heißsiegelkleberschicht motivförmig zu vernetzen, bietet sich folgende Vorgehensweise an: ein Sicherheitselement wird durch Heißsiegeln mit dem Substrat verbunden, dann das Substrat (Papier) in Form eines gewünschten Motivs befeuchtet und schließlich eine Strahlenvernetzung durchgeführt. In den befeuchteten Bereichen wird stark vernetzt, in den nicht befeuchteten Bereichen wird dagegen deutlich weniger stark vernetzt, so dass man eine erfindungsgemäße Manipulationsschutzschicht mit Bereichen unterschiedlich starker Vernetzung und daher unterschiedlicher physikalischer Eigenschaften erhält. Besondere Aspekte ergeben sich bei Verwendung kationisch härtender Kleber als strahlenvernetzbare Schicht, und zwar als strahlenvernetzbare Zwischenschicht oder Heißsiegelschicht. Die kationische Strahlenhärtung ist im Gegensatz zur anionischen, nichtionischen und radikalischen Strahlenhärtung ein langsamerer Prozess, der auch nach Bestrahlungsende noch weiter läuft. Während Radikale in kurzer Zeit abgefangen werden, wird bei der kationischen Strahlenhärtung eine Säure freigesetzt, die in der Manipulationsschutzschicht die Vernetzungsreaktion katalysiert. Daher kann eine kationisch strahlenhärtbare Manipulationsschutzschicht zuerst von der Manipulationsschutzschicht-Seite her bestrahlt und unmittelbar darauf mit einem Substrat verklebt werden. Die kationische Strahlenhärtung schreitet dann auch ohne Belichtung weiter fort. Die Belichtung vor dem Verkleben von der Beschichtungsseite her ist vorteilhaft, da keine Belastung des Substrats, beispielsweise Papier, durch die Vernetzungsstrahlung, und auch eine geringere Strahlenbelastung des Materials des Sicherheitselements stattfindet. Durch die Bestrahlung wird die Vernetzungsreaktion gestartet. Zum Zeitpunkt der Applikation auf das Wertgegenstandssubstrat oder auf andere Schichten des Sicherheitselements, z. B. wenn der kationisch härtende Kleber eine Zwischenschicht darstellt, ist sie aufgrund der kurzen Zeitspanne noch nicht soweit fortgeschritten, dass das Aufschmelzen des Klebermaterials erschwert würde. Da die Reaktion aber ohne weitere Maßnahmen von alleine weiter läuft, erhält man die gewünschten Bereiche mit unterschiedlicher Aushärtung und unterschiedlichen physikalischen Eigenschaften.

Die kationische Härtung kann auch partiell abgebrochen werden, wodurch sich ebenfalls Bereiche unterschiedlicher Haftkraft und Beständigkeit gegen verschiedene Lösungsmittel ergeben. Beschichtet man einerseits ein Sicherheitselement mit einem kationisch härtenden Heißsiegelkleber und andererseits den zu schützenden Gegenstand mit einer basischen, beispielsweise aminhaltigen Beschichtung in Motivform, bestrahlt die Heißsiegelkleberschicht und klebt das Sicherheitselement dann auf den motivförmig beschichteten Gegenstand auf, so wird in den Motiv-Bereichen die Härtungsreaktion abgebrochen und man erhält in der Manipulationsschutzschicht Bereiche unterschiedlicher Aushärtung.

Eine Schicht, die basische Verbindungen in Motivform enthält, kann statt auf dem zu schützenden Substrat auch auf der Heißsiegelkleberschicht vorgesehen werden. Beispielsweise kann musterförmig eine blockfreie Schicht mit einem hohen Anteil einer aufschmelzenden Base, vorzugsweise eines Amins, aufgedruckt werden. Alternativ kann auch eine strahlenabsorbierende oder strahlenreflektierende blockfreie Schicht auf den Heißsiegelkleber in Form eines gewünschten Musters aufgedruckt werden. Diese Schichten bilden eine Maske, die bei rückseitiger Bestrahlung die Aushärtung der Manipulationsschutzschicht in den abgedeckten Bereichen verhindert.

Als weitere Variante können auf kationisch vernetzende Heißsiegelkleberschichten Motivschichten mit photolatenten Säuren, auf anionisch vernetzende Heißsiegelkleberschichten Motivschichten mit photolatenten Basen, und auf radikalisch vernetzende Heißsiegelkleberschichten Motivschichten mit bei Bestrahlung radikalbildenden Verbindungen aufgetragen werden. Nach Verkleben mit dem zu schützenden Gegenstand und Bestrahlung der Manipulationsschutzschicht findet eine Vernetzung nur in den Bereichen statt, die mit den Motivschichten bedeckt sind.

Wie vorstehend dargelegt wurde, kann sich die Manipulationsschutzschicht an verschiedenen Stellen innerhalb des Sicherheitselementaufbaus befinden. Innerhalb des Sicherheitselement-Schichtaufbaus kann die Manipulationsschutzschicht beispielsweise eine Haftvermittlerschicht oder eine Druckannahme-, Schutz- oder Kaschierschicht darstellen. Bei derartigen Schichten ergibt sich der Vorteil, dass ein strahlenvernetzbarer, thermoplastischer Kleber nach Abkühlung unter die Heißsiegeltemperatur oder ggf. nach physikalischer Trocknung sofort weiterverarbeitbar ist und erst irgendwann später im Herstellungsprozess des Sicherheitselements, beispielsweise bei einem ohnehin anfallenden Belichtungsschritt, ausgehärtet werden kann. Besonders bevorzugt ist es, zuerst das Sicherheitselement mit einem Wertgegenstand-Substrat zu verkleben und dann alle strahlenvernetzbaren Schichten gemeinsam zu härten.

Stellt die Manipulationsschutzschicht die Sicherheitselement und Wertgegenstand verbindende Schicht dar, kann der Wertgegenstand bei der Herstellung der Manipulationsschutzschicht mit einbezogen werden, insbesondere wenn es sich bei dem Wertgegenstand um Papiere oder Kunststofffolien handelt. Grundsätzlich aber ist die Einbeziehung des Substrats bei allen Substratoberflächen möglich. Zum Erzielen eines Tamper Evident-Effekts wird ein strahlenvernetzbarer Heißsiegelkleber sowohl als Heißsiegelkleber-Außenschicht des Sicherheitselements als auch als Primerschicht auf dem Substrat vorgesehen. Eine der Schichten wird vollflächig ausgebildet, die andere Schicht hat die Form eines Motivs. Beim Verbinden der Schichten ergeben sich unterschiedliche Schichtdicken, was bei Bestrahlung zu Bereichen mit unterschiedlicher Aushärtung führt. Vorzugsweise sollte die Schicht mit dem Motiv deutlich dicker sein, wobei die Dickenunterschiede nicht so groß werden dürfen, dass eine vollflächige Verklebung zwischen Substrat und Sicherheitselement nicht mehr möglich ist.

Das Substrat mit dem strahlenvernetzbaren Heißsiegelkleber vor dem Heißsiegeln des Sicherheitselements zu "primern", beispielsweise über ein Druckverfahren, hat die Vorteile, dass das Substrat gegenüber einem reinem Heißsiegelvorgang besser benetzt wird und eine dickere heißsiegelfähige Schicht erhalten wird. Beides verbessert das Haftungsvermögen. Sowohl das Sicherheitselement mit der Heißsiegelkleber-Außenschicht als auch das Substrat mit der Heißsiegelkleber-Primerschicht ist nach physikalischer Trocknung des Klebers tackfrei und daher wickelbar, stapelbar, lagerbar, aber reaktionsfähig bis zum Heißsiegelvorgang. Beim Heißsiegeln verschmelzen die beiden thermoplastischen, chemisch praktisch identischen Schichten Heißsiegelkleber und Substratprimer und vernetzen bei der anschließenden Bestrahlung miteinander. Heißsiegelkleber und Substratprimer sind dann praktisch nicht mehr voneinander zu unterscheiden und bilden eine einheitliche Schicht mit, bei motivabhängiger Primerung, Bereichen unterschiedlicher Benetzung und daher unterschiedlicher Haftkraft, kurz gesagt, die Voraussetzung für Tamper Evident-Effekte sind damit gegeben.

Einen Sonderfall von Substratprimern stellen Schichten mit photolatenten Säuren, photolatenten Basen und photolatenten Radikalbildnern dar. Werden Substrate mit derartigen reaktiven Primern (Initiatoren) mit Manipulationsschutzschichten verklebt, die kationisch vernetzende, anionisch vernetzende bzw. radikalisch vernetzende Komponenten enthalten, und die Schichten anschließend bestrahlt, so findet die Vernetzung der Manipulationsschutzschicht nur in den Bereichen statt, die mit Substratbereichen verklebt sind, die eine Primerschicht aufweisen, d. h. auf denen sich der erforderliche Initiator befindet.

Wesentlich ist, dass mindestens zwei Klebersysteme so miteinander kombiniert werden, dass sich in Erstreckungsrichtung der Heißsiegelkleberschicht mindestens zwei, bevorzugt mehrere, miteinander abwechselnde Bereiche ergeben, die sich hinsichtlich mindestens einer physikalischen Eigenschaft, wie Klebefähigkeit, Löslichkeit in wässrigen und/oder organischen Lösungsmitteln, thermoplastischen Eigenschaften, voneinander unterscheiden. Typischerweise unterscheiden sich unterschiedliche Klebersysteme in mehr als einer der genannten Eigenschaften. Bevorzugt sollten alle verwendeten Kleber nach physikalischer Trocknung bzw. Abkühlung unter die Heißsiegeltemperatur im Wesentlichen tackfrei sein.

In der Regel sind Klebersysteme auf wässriger Basis nach physikalischer Trocknung weniger wasserbeständig, d. h. weniger beständig gegen kaltes Wasser, Kochwasser, Seifenlauge, etc., als Klebersysteme auf Lösungsmittelbasis (auf der Basis organischer Lösungsmittel), und Klebersysteme auf Lösungsmittelbasis sind nach physikalischer Trocknung weniger beständig gegen diverse organische Lösungsmittel, z. B. Aceton, Toluol, etc., als Klebersysteme auf wässriger Basis. Diesen Umstand macht man sich erfindungsgemäß zu nutze, indem man die Manipulationsschutzschicht aus mindestens zwei unterschiedlichen Systemen zusammensetzt, die ein Muster, beispielsweise eine bildliche Darstellung oder ein Streifenmuster, bilden. Dabei ergibt sich eine Vielzahl von Kombinationsmöglichkeiten:
- Miteinander kombiniert werden können beispielsweise zwei oder mehr Heißsiegelkleber auf wässriger Basis, wobei sich nach physikalischer Trocknung eine Manipulationsschutzschicht mit zwei oder mehr Bereichen mit zumindest unterschiedlicher Beständigkeit gegen wässrige Lösungsmittel ergibt;
- zwei oder mehr Heißsiegelkleber auf Lösungsmittelbasis, wobei sich nach physikalischer Trocknung eine Manipulationsschutzschicht mit zwei oder mehr Bereichen mit zumindest unterschiedlicher Beständigkeit gegen organische Lösungsmittel ergibt;
- mindestens ein Heißsiegelkleber auf wässriger Basis und mindestens ein Heißsiegelkleber auf Lösungsmittelbasis, wobei sich nach physikalischer Trocknung eine Manipulationsschutzschicht mit mindestens einem Bereich, der in wässrigen Lösungsmitteln, kaum aber in organischen Lösungsmitteln löslich ist, und mindestens einem Bereich, der in organischen Lösungsmitteln, kaum aber in wässrigen Lösungsmitteln löslich ist, ergibt;
- mindestens ein Heißsiegelkleber auf wässriger Basis, mindestens ein Heißsiegelkleber auf Lösungsmittelbasis und mindestens ein strahlenhärtbarer Heißsiegelkleber, wobei sich nach physikalischer Trocknung und Strahlenhärtung eine Manipulationsschutzschicht mit mindestens drei verschiedenen Bereichen, die sich mindestens hinsichtlich ihrer Löslichkeit in wässrigen und organischen Lösungsmitteln, in der Regel auch hinsichtlich Klebefähigkeit und/oder thermoplastischen Eigenschaften unterscheiden, ergibt; etc. Grundsätzlich sind beliebige Kombinationen der genannten Klebersysteme möglich.

Die strahlenhärtbaren Kleber können Schmelzklebstoffe oder Kleber auf Lösungsmittelbasis oder auf wässriger Basis sein.

Gemäß einer Variante werden die verschiedenen Heißsiegelkleber so miteinander kombiniert, dass lediglich in Erstreckungsrichtung der Manipulationsschutzschicht Bereiche unterschiedlicher Eigenschaften vorliegen, während die Eigenschaften eines Bereichs in Dickenrichtung der Manipulationsschutzschicht konstant sind.

Gemäß einer weiteren Variante kann auch ein Heißsiegelkleber vollflächig aufgetragen werden, d. h. dieselbe flächenmäßige Ausdehnung wie das Sicherheitselement selbst haben, und ein weiterer, davon verschiedener Heißsiegelkleber als Motiv darauf aufgebracht werden. Die Art der Heißsiegelkleber (wasserbasierend, lösungsmittelbasierend, strahlenhärtend) ist dabei ohne Belang, solange die Kleber miteinander verträglich, d.h. miteinander verklebbar sind. Es ist darauf zu achten, dass die Motivschicht dünn genug ist, um eine vollflächige Verklebung der benachbarten Sicherheitselement-Schicht oder Substratschicht zu gewährleisten. Sind die vollflächige Schicht und die Motivschicht beide strahlenhärtend, verbinden sie sich bei Bestrahlung zu einer in Dickenrichtung jeweils homogenen Schicht mit konstanten physikalischen Eigenschaften.
Der Auftrag der verschiedenen Heißsiegelkleber erfolgt musterförmig (motivförmig) exakt registerhaltig oder mit einander leicht überlappenden Bereichen. Bevorzugt werden die Heißsiegelkleber in einem Druckverfahren aufgetragen. Bei überlappender Auftragung sind die überlappenden Bereiche dicker als die nicht überlappenden Bereiche. Eine Überlappung einander benachbarter Bereiche unterschiedlicher Heißsiegelkleber, ohne dass durch die Dickenschwankung die vollflächige Verklebung der an die Manipulationsschutzschicht angrenzenden Schichten beeinträchtigt wird, ist eine Nebeneinander-Anordnung in Flächenrichtung im Sinne der vorliegenden Erfindung.

Als Beispiele für geeignete Heißsiegelkleber auf wässriger Basis bzw. auf Lösungsmittelbasis können Polyester, Polyacrylate, Urethan-Harze, Methacrylate, Isocyanate, blockierte Isocyanate, Polyvinylchloride (PVC-Harze), Polyvinylbutyrale (PVB-Harze), Polyamide, Keton-Harze, Maleinat-Harze, Dual-Cure-Harze, Ionomerdispersionen, Alkyd-Harze, Phenol-Harze, etc., genannt werden.

Die erfindungsgemäßen Sicherheitselemente können in der Schichtfolge, die sie später auf einem zu schützenden Gegenstand aufweisen werden, hergestellt werden. Sie können aber auch auf einer Trägerschicht, beispielsweise einer Kunststofffolie, vorbereitet werden und bei Bedarf mittels einer Klebstoffschicht, beispielsweise einer erfindungsgemäßen Manipulationsschutzschicht in der gewünschten Umrissform auf den zu schützenden Gegenstand übertragen werden. Derartige Sicherheitselemente werden als Transferelemente bezeichnet, und da beim Transfer die Trägerschicht des Transferelements die oberste Schicht bildet, muss der Schichtaufbau des Transferelements die umgekehrte Schichtfolge aufweisen, die auf dem zu schützenden Gegenstand vorliegen soll. Die Trägerschicht kann nach dem Transfer von dem Schichtaufbau des Sicherheitselements abgezogen werden. Um das Ablösen der Trägerschicht zu erleichtern, kann zwischen der Trägerschicht und dem Rest des Sicherheitselements eine Trennschicht vorgesehen sein. Alternativ kann die Trägerschicht des Transferelements aber auch als Schutzschicht auf dem Sicherheitselement verbleiben. Als Materialien für die Trägerschicht kommen in erster Linie Kunststoffe, insbesondere PET (Polyethylenterephthalat), PBT (Polybutylenterephthalat), PEN (Polyethylennaphthalat), PP (Polyproyplen), PA (Polyamid), PE (Polyethylen) in Betracht. Die Kunststoffe werden in der Regel als Folie eingesetzt, die monoaxial oder biaxial gereckt sein kann.

Die Übertragung von Transferelementen auf ein Substrat, d. h. einen zu schützenden Gegenstand, und ihre Verbindung mit dem Substrat erfolgt ebenso wie die Verbindung von Sicherheitselementen mit der "richtigen" Schichtabfolge mit einem Substrat bevorzugt durch Heißsiegeln. Die Schicht aus Heißsiegelkleber ist beispielsweise eine erfindungsgemäße Manipulationsschutzschicht. Zur Verbesserung der Haftkraft kann zwischen der Manipulationsschutzschicht und der übrigen Schichtfolge des Sicherheitselements eine weitere Klebstoffschicht aufgetragen sein, beispielsweise aus dem oder einem der Klebstoffe, die die Manipulationsschutzschicht bilden, die physikalisch getrocknet und anschließend durch Bestrahlung vernetzt oder vorvernetzt wird. Auch auf dem Substrat selbst kann eine derartige Klebstoffschicht zur Haftverbesserung vorgesehen werden.

Wenn die Heißsiegelkleberschicht Bereiche mit strahlenvernetzbaren Komponenten enthält, kann die Vernetzung, je nach Art der strahlenvernetzbaren Komponenten, auf unterschiedliche Arten vorgenommen werden. Eine Möglichkeit besteht darin, nach dem Aufbringen des Transfer-Sicherheitselements bei erhöhtem Druck und erhöhter Temperatur die Heißsiegelkleberschicht oder Bereiche davon mittels Bestrahlung durch das Substrat des Wertgegenstands hindurch zu vernetzen. Bei Klebersystemen, deren Vernetzung nach Initiierung weiter fortschreitet, kann die Bestrahlungsdosis niedrig gehalten werden oder auf eine Bestrahlung ganz verzichtet werden. Bei kationisch vernetzenden Systemen kann möglicherweise die Wärme beim Heißsiegelvorgang ausreichend sein, um eine Vernetzung zu initiieren, die nach dem Heißsiegelvorgang ohne Bestrahlung weiterläuft.

Die Bestrahlung von der Substratseite her bzw. die Minimierung oder Vermeidung von Bestrahlung verringert bzw. vermeidet in vorteilhafter Weise die Strahlenbelastung des Materials des Sicherheitselements.

Die Transferelemente gemäß der vorliegenden Erfindung werden bevorzugt als Band mit einer Vielzahl von Transferelementen bereitgestellt. Hinsichtlich Details zum Aufbau derartiger Transferbänder und der Übertragung der Transferelemente auf zu schützende Substrate wird auf EP 0 420 261 B1 verwiesen.

Die vorliegende Erfindung umfasst auch ein Sicherheitspapier für die Herstellung von Wertdokumenten, wie Banknoten, Schecks, Ausweiskarten aus Papier und/oder Kunststoff, Urkunden, Kreditkarten oder dergleichen, das mit dem erfindungsgemäßen Sicherheitselement ausgestattet ist. Als Substratmaterial für das Sicherheitspapier kommt jede Art von Papier in Betracht, insbesondere Baumwoll-Velinpapier. Selbstverständlich kann auch Papier eingesetzt werden, welches einen Anteil x polymeren Materials im Bereich von 0 < x < 100 Gew.-% enthält.

Weiterhin ist es grundsätzlich denkbar, wenn auch gegenwärtig nicht bevorzugt, dass das Sicherheitspapier für die Herstellung der Wertdokumente eine Kunststofffolie, z. B. eine Polyesterfolie, ist. Die Folie kann ferner monoaxial oder biaxial gereckt sein. Die Reckung der Folie führt unter anderem dazu, dass sie polarisierende Eigenschaften erhält, die als weiteres Sicherheitsmerkmal genutzt werden können.
Zweckmäßig kann es auch sein, wenn das Substratmaterial ein mehrschichtiger Verbund ist, der wenigstens eine Schicht aus Papier oder einem papierartigen Material aufweist. Ein solcher Verbund zeichnet sich durch eine außerordentlich große Stabilität aus, was für die Haltbarkeit des Papiers bzw. Datenträgers von großem Vorteil ist.

Denkbar ist aber auch, als Substratmaterial ein mehrschichtiges, papierfreies Kompositmaterial einzusetzen. Auch diese Materialien sind gegenwärtig nicht bevorzugt, können aber in bestimmten Klimaregionen der Erde mit Vorteil eingesetzt werden.

Alle als Substratmaterial eingesetzten Materialien können Zusatzstoffe aufweisen, die als Echtheitsmerkmale dienen. Dabei ist in erster Linie an Lumineszenzstoffe zu denken, die im sichtbaren Wellenlängenbereich vorzugsweise transparent sind und im nicht sichtbaren Wellenlängenbereich durch ein geeignetes Hilfsmittel, z. B. eine UV- oder IR-Strahlung emittierende Strahlungsquelle, angeregt werden können, um eine sichtbare oder zumindest mit Hilfsmitteln detektierbare Lumineszenz zu erzeugen.

Das Sicherheitselement kann grundsätzlich in beliebigen Formen vorliegen. In bevorzugten Ausgestaltungen hat es die Form eines Sicherheitsbandes, eines Sicherheitsstreifens, eines Etiketts, eines Folienpatches oder eines sonstigen flächigen Sicherheitselements. Die Dicke des Sicherheitselements wird wesentlich von dem zu schützenden Gegenstand mitbestimmt. Bevorzugt weist das Sicherheitselement eine Dicke von 1 µm bis 100 µm, besonders bevorzugt eine Dicke von 2 µm bis 50 µm, auf. Dabei handelt es sich um die bei der Ausstattung von Wertdokumenten und Sicherheitspapieren mit Sicherheitselementen leicht handhabbaren Dicken der Sicherheitselemente.
Das Substrat des erfindungsgemäßen Sicherheitselements ist bevorzugt flexibel, da auch die meisten mit dem Sicherheitselement auszustattenden Gegenstände, wie z. B. Banknoten oder Urkunden, in der Regel flexibel sind. Die zu schützenden Gegenstände sind typischerweise flächige Gegenstände aus Materialien auf der Basis von Papier und/oder Kunststoff, wie bereits vorstehend für das erfindungsgemäße Sicherheitspapier beschrieben. Besonders bevorzugt sind Wertgegenstand-Substrate, die für UV-Strahlung oder Elektronenstrahlung zumindest teilweise durchlässig sind.

Neben der Verwendung zur Herstellung von Sicherheitspapieren und Wertdokumenten sind die erfindungsgemäßen Sicherheitselemente ganz allgemein zur Produktsicherung von Waren jeglicher Art geeignet, beispielsweise zur Kennzeichnung von Markenartikeln oder Verpackungen.

Die vorliegende Erfindung wird nachfolgend anhand von Figuren noch weiter veranschaulicht. Es wird darauf hingewiesen, dass die Figuren nicht maßstabs- und proportionsgetreu sind.

Es zeigen
- Fig. 1: eine Darstellung eines beispielhaften erfindungsgemäßen Sicherheitspapiers mit L-LEAD-Aufbau im Querschnitt;
- Fig. 2: eine schematische, stark vereinfachte Darstellung eines erfindungsgemäßen Sicherheitselements mit einer Manipulationsschutzschicht als Zwischenschicht, einer Manipulationsschutzschicht als Außenschicht und mit einer internen Bestrahlungsmaske, im Querschnitt;
- Fig. 3a: eine Draufsicht auf die interne Bestrahlungsmaske des Sicherheitselements von Fig. 2;
- Fig. 3b: eine Draufsicht auf eine Manipulationsschutzschicht des Sicherheitselements von Fig. 2 nach Bestrahlung und Ablösung eines Teils des Sicherheitselements;
- Fig. 4: ein erfindungsgemäßes Sicherheitselement wie in Fig. 2, aber ohne interne Maske und in Draufsicht bei Bestrahlung durch eine externe Maske;
- Fig. 5: eine schematische, stark vereinfachte Darstellung eines erfindungsgemäßen Sicherheitspapiers im Querschnitt mit einem erfindungsgemäßen Sicherheitselement mit einer Manipulationsschutzschicht als Zwischenschicht;
- Fig. 6: eine Darstellung wie in Fig. 5, aber mit einer zusätzlichen Manipulationsschutzschicht als Außenschicht und mit dem Substrat als Maskenschicht;
- Fig. 7a: eine schematische, stark vereinfachte Darstellung eines weiteren, nicht erfindungsgemäßen Sicherheitselements mit einer Manipulationsschutzschicht als Außenschicht, im Querschnitt;
- Fig. 7b: eine schematische, stark vereinfachte Darstellung eines weiteren, nicht erfindungsgemäßen Sicherheitspapiers mit dem Sicherheitselement von Fig. 7a, im Querschnitt;
- Fig. 8: eine schematische, stark vereinfachte Darstellung eines weiteren, nicht erfindungsgemäßen Sicherheitspapiers mit erfindungsgemäßem Sicherheitselement mit einer Manipulationsschutzschicht als Außenschicht und mit einem geprimerten Substrat im Querschnitt;
- Fig. 9a bis Fig. 9d: schematische, stark vereinfachte Darstellungen weiterer erfindungsgemäßer Sicherheitspapiere mit verschiedenen Varianten von erfindungsgemäßen Manipulationsschutzschichten, im Querschnitt; und
- Fig. 10: die Übertragung eines erfindungsgemäßen Sicherheitselements von einem erfindungsgemäßen Transferband auf ein Substrat.

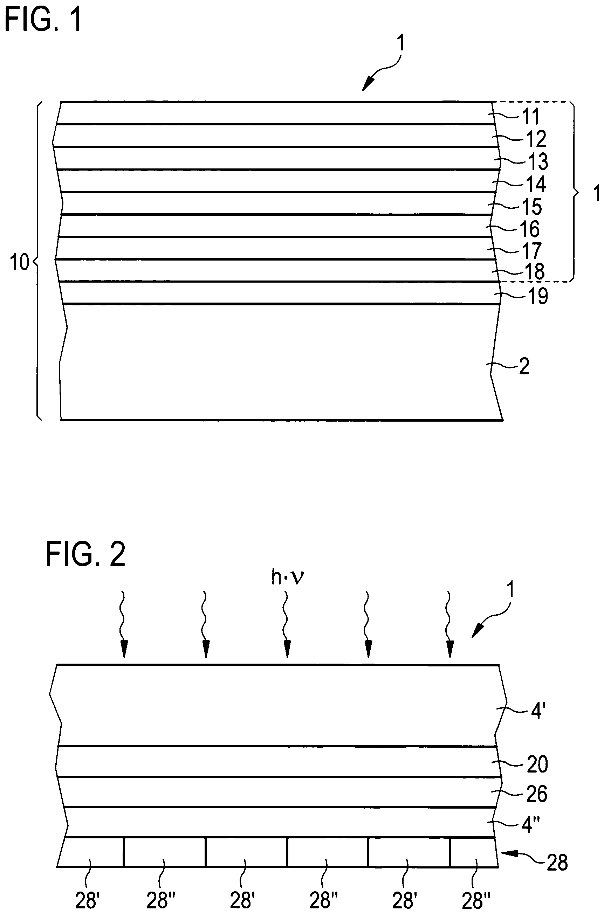

Fig.1 zeigt einen beispielhaften Aufbau eines sogenannten L-LEAD-Sicherheitsstreifens. Ein sogenanntes L-LEAD-Sicherheitselement besteht typischerweise aus einer Trägerfolie 12, beispielsweise einer PET-Folie, optional mit einem weiteren Schichtaufbau 11, wie einer Druckannahme-, Schutz- oder Kaschierschicht, einer Prägelackschicht 13 mit einem holographischen Sicherheitsmerkmal, einer PVD-Schicht 14, die in der Regel zum Teil demetallisiert ist, einer Lackschicht 15, beispielsweise mit schwarzer Druckfarbe oder mit Metallic-Druckfarbe, einer Primerschicht 16, die als Haftvermittler dient, optional einer weiteren Funktionsschicht 17, beispielsweise mit metallischem oder fluoreszierendem Aufdruck, und einer Heißsiegelkleberschicht 18 zur Verbindung mit einem Substrat 2, beispielsweise einem Wertdokument. Auch beliebige andere Papiere und Folien, Verbundaufbauten oder Polymeroberflächen können als Substrat dienen. Zur Verbesserung der Haftung zwischen Sicherheitselement 1 und Substrat 2 kann das Substrat eine optionale Primerschicht 19 besitzen.

Sicherheitselemente dieser Art mit einer Trägerfolie 12 werden bevorzugt bei Substraten mit Öffnungen zur Abdeckung der Öffnung verwendet. Sogenannte T-LEAD-Sicherheitselemente weisen die Trägerfolie 12 (und den optionalen Schichtaufbau 11) hingegen nicht auf, sind aber ansonsten identisch. T-LEAD-Sicherheitselemente werden in der Regel in einem Bereich auf ein Substrat aufgebracht, der im Wesentlichen keine Öffnung aufweist.

An dem gezeigten Vielschicht-Sicherheitselement lässt sich die universelle Anwendbarkeit der vorliegenden Erfindung zeigen. Die thermoplastischen, gegebenenfalls strahlennachvernetzenden Klebstoffsysteme der vorliegenden Erfindung lassen sich als Druckannahme-, Schutz- und Kaschierschicht 11, als Haftvermittlerschicht 16, als Heißsiegelkleberschicht 18 sowie auch als Substratprimer 19 einsetzen. Zur Vernetzung der strahlenvernetzbaren, gegebenenfalls strahlennachvernetzbaren Systeme können die Schichten 14 und 15 als Masken dienen, wenn durch den Schichtaufbau hindurch bestrahlt wird. Man kann auf diese Weise eine oder mehrere Manipulationsschutzschichten vorsehen und hat Variationsmöglichkeiten hinsichtlich der Lage der Manipulationsschichten zu den Funktionsschichten 13,14,15,17. Ein besonderer Vorteil liegt darin, dass vernetzbare Klebersysteme innerhalb des Schichtaufbaus des Sicherheitselements während des Herstellungsprozesses des Sicherheitselements nicht gehärtet, sondern lediglich auf Raumtemperatur abgekühlt (Schmelzklebstoffe) bzw. physikalisch getrocknet (Dispersionen) werden müssen und dann gleich weiter verarbeitet werden können. Auch die Heißsiegelkleberschicht 18 muss lediglich tackfrei sein, aber nicht vernetzt werden. Vielmehr können sämtliche strahlenvernetzbare Schichten nach dem Verkleben mit dem Substrat gemeinsam in einem einzigen Bestrahlurigsprozess ausgehärtet werden. Vor dem Verkleben mit dem Substrat kann das Sicherheitselement ohne Schmelzpunktänderung der Kleberschichten über längere Zeit gelagert werden, bevorzugt in Form von zu Rollen aufgewickelten Sicherheitselement-Bändern.

Fig. 2 zeigt in stark vereinfachter Darstellung ein Sicherheitselement 1 mit einem Schichtaufbau 4', einer Funktionsschicht 20, einer Manipulationsschutzschicht 26, einem Schichtaufbau 4" und einer weiteren Manipulationsschutzschicht 28. Die Schichtaufbauten 4' und 4" können jeweils aus einer oder mehreren Schichten bestehen, beispielsweise Funktionsschichten, Haftvermittlerschichten, etc. Es ist anzumerken, dass in den Figuren die Bezugsziffern 4' und 4" verwendet werden, wenn eine Figur zwei Teil-Schichtaufbauten zeigt, und die Bezugsziffer 4, wenn eine Figur nur einen Schichtaufbau zeigt. Die Schicht 20 ist in dem vorliegenden Ausführungsbeispiel eine teilweise demetallisierte PVD-Schicht, die Manipulationsschutzschicht 26 besteht aus einer pigmentierten Schicht aus einem durch UV-Strahlung vernetzbaren Heißsiegelkleber mit Photoinitiator, und die Manipulationsschutzschicht 28 besteht aus zwei verschiedenen Heißsiegelklebern, jeweils mit Fluoreszenzpigmenten. Die verschiedenen Heißsiegelkleber sind streifenförmig alternierend auf den Schichtaufbau 4" aufgedruckt, wobei sich Bereiche 28' aus Heißsiegelkleber auf Lösungsmittelbasis und Bereiche 28" aus Heißsiegelkleber auf Wasserbasis ergeben. Das Streifenmuster wurde aufgrund der einfachen Darstellbarkeit gewählt, es sind jedoch natürlich beliebige andere Muster aufdruckbar. Die Manipulationsschutzschicht 28 ist in dem vorliegenden Ausführungsbeispiel nicht strahlenvernetzbar.

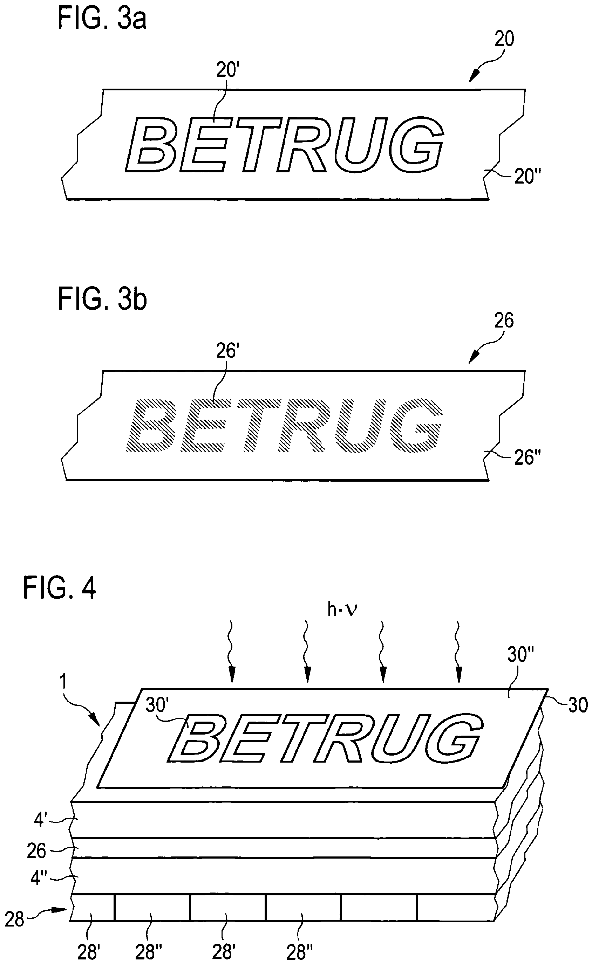

Das Sicherheitselement 1 wird durch den Schichtaufbau 4' und die Funktionsschicht 20 hindurch mit UV-Strahlung bestrahlt, wobei die Funktionsschicht als interne Maske dient. Die interne Maske 20 ist in Fig. 3a in Draufsicht gezeigt. Sie weist demetallisierte Bereiche 20', die UV-durchlässig sind, und metallisierte Bereiche 20", die kaum UV-durchlässig sind, auf. Bei UV-Bestrahlung der Schicht 26 durch die interne Maske 20 hindurch werden daher in der Schicht 26 nur die Bereiche 26', die unter den Bereichen 20' liegen, gut vernetzt, während die übrigen Bereiche 26", die unter den Bereichen 20" liegen, kaum vernetzt werden. Dieses Vernetzungsmuster ist in Fig. 3b gezeigt.

Wird das Sicherheitselement mit einem Substrat (nicht gezeigt) durch Heißsiegeln verbunden, ist es nach dem Erkalten der Manipulationsschutzschicht 28 nicht mehr zerstörungsfrei von dem Substrat ablösbar. Versucht man, es mit organischen Lösungsmitteln abzulösen, lösen sich die Bereiche 28', während die Bereiche 28" auf dem Substrat bleiben, und die Fluoreszenzpigmente erzeugen unter UV-Licht ein Streifenmuster. Versucht man, das Sicherheitselement mit wässrigen Lösungsmitteln abzulösen, lösen sich die Bereiche 28", während die Bereiche 28' auf dem Substrat verbleiben, und die Fluoreszenzpigmente in diesen Bereichen ebenfalls unter UV-Licht ein Streifenmuster auf dem Substrat erzeugen. Versucht man, das Sicherheitselement von dem Substrat mechanisch abzuziehen, wird entweder ebenfalls durch die sich voneinandertrennenden Bereiche 28' und 28" der Manipulationsschutzschicht 28 ein unter UV-Licht sichtbares Streifenmuster auf dem Substrat erzeugt, oder auf dem Substrat wird das in Fig. 3b gezeigte Schriftbild sichtbar, das sich dadurch ergibt, dass die nicht bzw. nicht vollständig ausgehärteten Bereiche 26" der Manipulationsschutzschicht 26 zusammen mit den Schichten 20 und 4' des Sicherheitselements abgezogen werden können, während die ausgehärteten Bereiche 26' der Manipulationsschutzschicht 26 zusammen mit den übrigen Schichten des Sicherheitselements auf dem Substrat bleiben. Die Manipulation ist somit eindeutig erkennbar.
Generell ist anzumerken, dass Manipulationsversuche an dem z. B. auf dem Substrat angeordneten erfindungsgemäßen Sicherheitselement stets als solche erkennbar sind, und zwar unabhängig davon ob die an die Manipulationsschutzschicht angrenzenden Schichten identische oder verschiedene physikalische Eigenschaften, z. B. Klebefähigkeit zu der Manipulationsschutzschicht, aufweisen. Das bedeutet z. B. für die in Fig. 2 gezeigten Schichten 20, 26 und 4", dass aufgrund der unterschiedlich gehärteten Bereiche der Manipulationsschutzschicht 26 ein Ablöseversuch (mechanische Manipulation) in jedem Fall erkennbar ist, da eine zerstörungsfreie Ablösung der unterschiedlich gehärteten Bereiche der Manipulationsschutzschicht 26 zusammen mit den angrenzenden Schichten 20 und Schicht 4' nicht möglich ist. Dies gilt unabhängig davon, ob die beiden an die Schicht 26 angrenzenden Schichten 20 und 4" z. B. bezüglich ihrer Klebefähigkeit zur Manipulationsschutzschicht 26 identische Eigenschaften zeigen oder nicht.

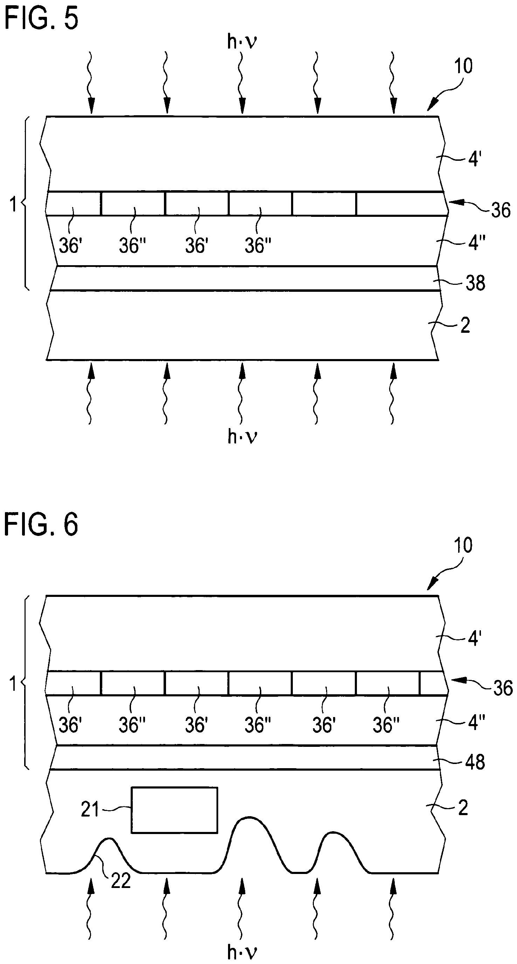

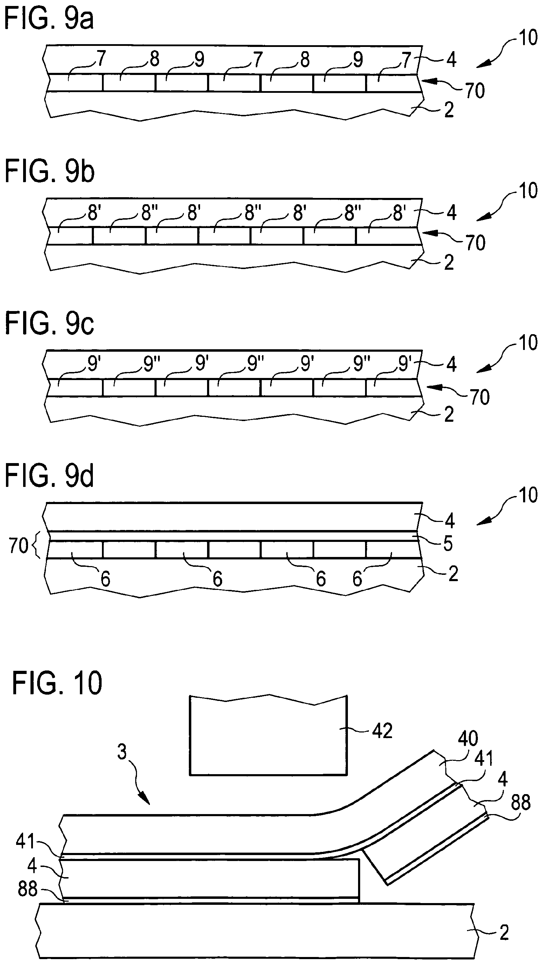

Selbstverständlich kann die Fälschungssicherheit bzw. der Manipulationsschutz noch dadurch erhöht werden, dass die an die Manipulationsschutzschicht 26 angrenzenden Schichten 20 und 4" unterschiedliche Klebeeigenschaften zu den Bereichen mit unterschiedlichen physikalischen Eigenschaften der Manipulationsschutzschicht 26 aufweisen. Beispielsweise kann die Schicht 4" zu den gehärteten Bereichen 26' eine bessere Klebefähigkeit aufweisen als zu den nicht gehärteten Bereichen 26". Ferner kann die angrenzende Schicht 20 so ausgebildet sein, dass ihre Klebefähigkeit zu den nicht gehärteten Bereichen 26" größer ist als zu den gehärteten Bereichen 26'. Diese mit Bezug auf die Figuren 2 und 3 gemachten Aussagen zu den physikalischen Eigenschaften der an die Manipulationsschutzschicht angrenzenden Schichten, insbesondere im Hinblick auf ihre Klebefähigkeit, gilt sinngemäß auch für andere in der vorliegenden Anmeldung beschriebenen bzw. gezeigten Ausführungsformen und andere physikalische Eigenschaften der an die Manipulationsschutzschicht angrenzenden Schichten, so z.B. für die Schichten 36 sowie 4' und 4" der Fig. 5 und Fig. 6, aber auch für die Schichten 70 sowie 4 und 2 der Fig. 9. Anhand der sich in Flächenrichtung der Manipulationsschutzschicht unterscheidenden Eigenschaften ist es demnach selbstverständlich immer möglich, den Manipulationsschutz durch die gezielte Auswahl der an die Manipulationsschutzschicht angrenzenden Schichten (Materialien, Eigenschaften, etc.) weiter zu verbessern.

Fig. 4 zeigt ein ähnliches Sicherheitselement wie das in Fig. 2 dargestellte Sicherheitselement, aber ohne interne Bestrahlungsmaske 20, in Draufsicht. Generell bedeuten gleiche Bezugsziffern in den Figuren gleiche oder vergleichbare Bestandteile. Anstatt durch die interne Maske 20 wird die Manipulationsschutzschicht 26 in dem Sicherheitselement 1 gemäß Fig. 4 durch eine über dem Sicherheitselement befindliche externe Maske 30 mit UV-Strahlung bestrahlt. Die externe Maske 30 ist motivmäßig so gestaltet wie die interne Maske 20 in Fig. 2, d. h. es gibt UV-durchlässige Bereiche 30' und UVundurchlässige Bereiche 30. Im Ergebnis wird in der Manipulationsschutzschicht 26 ebenfalls das in Fig. 3b gezeigte Muster erzeugt.

Alternativ kann auch ohne Vorschaltung einer externen Maske 30 bestrahlt werden. In diesem Fall muss zur Bestrahlung eine Strahlungsquelle verwendet werden, mit der sich das gewünschte Vernetzungsmuster, beispielsweise die Form der Bereiche 26' in Fig. 3b, "abfahren" lässt. Dies ist durch Laserbestrahlung oder durch Elektronenbestrahlung möglich. Die ebenfalls denkbare Erzeugung von Belichtungs-/Vernetzungsmustern mittels einer UV-Lampe mit speziellem Vorschaltgerät wurde bereits weiter oben erläutert. In jedem Fall kann dasselbe Ergebnis wie in Fig. 3b grundsätzlich auch ohne externe Maske erzielt werden.

Fig. 5 zeigt ein Sicherheitspapier 10 mit einem Sicherheitselement 1, das mittels einer homogenen Schicht 38 aus einem nicht strahlenhärtbaren Heißsiegelkleber mit dem Sicherheitspapier-Substrat 2 verbunden ist. Das Sicherheitselement 1 besitzt neben der Heißsiegelkleberschicht 38 auch eine Manipulationsschutzschicht 36, die aus einem strahlenvernetzbaren Heißsiegelkleber besteht. In der in Fig. 5 gezeigten Ausführungsform wechseln in der Manipulationsschutzschicht 36 Streifenbereiche 36' mit Photoinitiator und Streifenbereiche 36" ohne Photoinitiator ab. Bei Bestrahlung des Sicherheitspapiers entweder von der Vorderseite her (durch den Schichtaufbau 4') oder von der Rückseite her (durch den Schichtaufbau 4", die Heißsiegelkleberschicht 38 und das Substrat 2 hindurch), beispielsweise mit UV-Strahlung (ohne Verwendung einer Maske), werden nur die Bereiche 36' mit Photoinitiator vernetzt. Die vernetzten Bereiche 36' sind nicht mehr thermoplastisch und in Lösungsmitteln schwer löslich, während die unvernetzten Bereiche 36" thermoplastisch und in Lösungsmitteln löslich bleiben. Daher lassen sich auch unschwer die Schichtaufbauten 4' und 4" in der Ebene der Manipulationsschutzschicht 36 voneinandertrennen. Ist die Schicht 36 eingefärbt, bleibt auf dem manipulierten Sicherheitspapier ein sichtbares Streifenmuster zurück.

Fig. 6 zeigt ein dem Sicherheitspapier von Fig. 5 ähnliches Sicherheitspapier 10 mit einer Manipulationsschutzschicht 36. Abweichend von dem Sicherheitspapier in Fig. 5 weist das Sicherheitspapier von Fig. 6 jedoch eine weitere Manipulationsschutzschicht auf, nämlich die Manipulationsschutzschicht 48, mit der das Sicherheitselement mit dem Sicherheitspapier-Substrat 2 verklebt ist. Die Manipulationsschutzschicht 48 besteht aus einem strahlenvernetzbaren Heißsiegelkleber mit Photoinitiator, der tackfrei physikalisch trocknet.

In das Substrat 2 ist ein metallisierter Sicherheitsfaden 21 eingebettet und ein Wasserzeichen 22 (stark überhöht dargestellt) im Substrat ausgebildet.

Bei der Herstellung des Sicherheitselements 1 werden die Manipulationsschutzschichten 36 und 48 im Wesentlichen bis zur Tackfreiheit physikalisch getrocknet. In diesem Zustand kann das Sicherheitselement veränderungsfrei bis zu Verwendung gelagert werden. Die Aufbringung auf einen Wertgegenstand, wie das gezeigte Sicherheitspapier-Substrat 2, wird durch Heißsiegeln mittels der Manipulationsschutzschicht 48 bewerkstelligt. Anschließend wird von der Rückseite des Sicherheitselements her, also durch das Substrat 2 hindurch, ohne Verwendung einer Maske flächig bestrahlt, beispielsweise mittels UV-Strahlung. Dadurch werden die Bereiche 36' in der Manipulationsschutzschicht 36 vernetzt, und auch in der Manipulationsschutzschicht 48 finden Vernetzungsreaktionen statt, wobei die Vernetzung unterschiedlich stark ist, da das Substrat 2 als interne Maske wirkt. In den Bereichen der Manipulationsschutzschicht 48, die durch die aufgrund des Wasserzeichens 22 dünnen Substratbereiche hindurch bestrahlt werden, findet eine stärkere Vernetzung als in den übrigen Bereichen statt. In den Bereichen der Manipulationsschutzschicht 48, die durch den metallisierten Sicherheitsfaden 21 abgeschirmt werden, findet überhaupt keine Vernetzung statt, und die Manipulationsschutzschicht 48 bleibt thermoplastisch und in Lösungsmitteln löslich. Sind die Manipulationsschutzschichten 36 und 48 sichtbar oder unsichtbar, z. B. fluoreszierend, eingefärbt, ist ein Ablösen des Sicherheitselements unmittelbar offenkundig oder kann unter geeigneter Bestrahlung nachgewiesen werden, da Bereiche der Manipulationsschutzschicht auf dem Substrat verbleiben, während andere Bereiche mit dem Sicherheitselement oder mit Teilen des Sicherheitselements abgelöst werden.

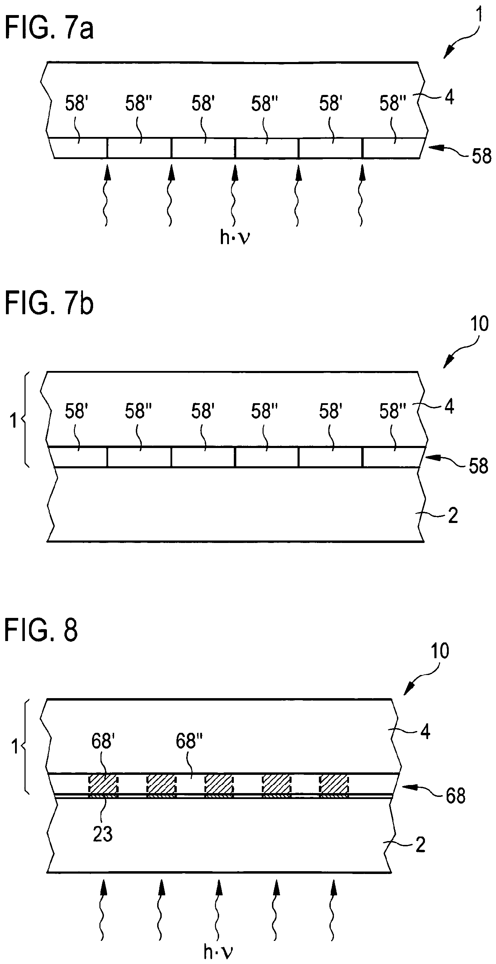

Fig. 7a zeigt ein Sicherheitselement 1 mit einem Schichtaufbau 4 und einer Manipulationsschutzschicht 58, die aus einem Heißsiegelklebstoff mit kationisch härtenden Komponenten besteht. Die Bereiche 58' des Heißsiegelklebers enthalten eine Photoinitiator, die Bereiche 58" jedoch nicht, wobei die Bereiche 58' und 58" wiederum in einem alternierenden Streifenmuster auf dem Schichtaufbau 4 aufgedruckt sind. Die Manipulationsschutzschicht 58 wird nun, wie in Fig. 7a gezeigt, mit UV-Strahlung flächig bestrahlt. Dadurch wird in den Bereichen 58' mit Photoinitiator die Vernetzungsreaktion initiiert. Anschließend wird, wie in Fig. 7b gezeigt, das Sicherheitselement 1 durch Heißsiegeln auf ein Wertgegenstand-Substrat 2 übertragen. Dabei findet eine Nachvernetzung der Manipulationsschutzschicht 58 statt, d. h. die Vernetzungsreaktion in den Bereichen 58' kommt nicht zum Stillstand, sondern läuft bis zum Ende weiter ab.

Fig. 8 zeigt ein Sicherheitselement 1 nach einem Heißsiegelungsvorgang auf ein Substrat 2. Das Sicherheitselement 1 besitzt einen Schichtaufbau 4 und eine Manipulationsschutzschicht 68, die gleichzeitig die Heißsiegelschicht ist. Die Manipulationsschutzschicht 68 besteht aus einem mittels UV-Strahlung vernetzbaren Heißsiegelkleber mit anionischem Polymerisationsmechanismus. Auf das Substrat 2 sind Streifen 23 einer Zusammensetzung, die eine photolatente Base enthält, aufgedruckt. Nach dem Heißsiegelungsvorgang wird die Manipulationsschutzschicht 68 mit UV-Strahlung bestrahlt. Dadurch wird die photolatente Base in dem Streifen 23 freigesetzt und wirkt als Initiator für die Vernetzungsreaktion. Vernetzt werden die Bereiche 68' der Manipulationsschutzschicht 68, die in Kontakt mit dem Streifen 23 sind, so dass eine Manipulationsschutzschicht 68 mit alternierenden vernetzten Bereichen 68' und unvernetzten Bereichen 68" entsteht. Bei einer kationisch vernetzenden Manipulationsschutzschicht müssten die Streifen 23 analog eine photolatente Säure enthalten.
Umgekehrt lässt sich in einem analog aufgebauten Sicherheitselement mit kationisch vernetzender Manipulationsschutzschicht eine bereits gestartete Vernetzungsreaktion beenden, wenn der kationisch aushärtende Heißsiegelklebstoff mit der durch Bestrahlung freigesetzten photolatenten Base in Berührung kommt.

Die Figuren 9a bis 9d zeigen Sicherheitspapiere 10, die jeweils ein Substrat 2 (beispielsweise aus Papier oder Kunststoff, mit homogener oder heterogener Oberfläche), einen Schichtaufbau 4 (Prägelacke, Metallisierungen, Primer, Aufdrucke, Folien, Schutzlacke, usw.) und eine Manipulationsschutzschicht 70 aufweisen. Die Sicherheitspapiere 10 unterscheiden sich in diesen Manipulationsschutzschichten 70. In Fig. 9a sind Bereiche 7 mit UV-vernetzbarem Heißsiegelklebstoff, Bereiche 8 mit Heißsiegelklebstoff auf Lösungsmittelbasis und Bereiche 9 mit Heißsiegelklebstoff auf Wasserbasis streifenförmig im Wechsel nebeneinander aufgedruckt. Die Bereiche können einander auch überlappen. Die Heißsiegelklebstoffe auf Lösungsmittelbasis und auf Wasserbasis brauchen nicht strahlenvernetzbar zu sein. Durch den Wechsel der unterschiedlichen Heißsiegelklebstoffe ergeben sich in der Manipulationsschutzschicht 70 Bereiche unterschiedlicher physikalischer Eigenschaften, wie beispielsweise eine unterschiedliche Löslichkeit in wässrigen und organischen Lösungsmitteln und unterschiedliche thermoplastische Eigenschaften.

Fig. 9b zeigt eine Darstellung wie Fig. 9a, wobei die Manipulationsschutzschicht 70 hier jedoch aus Bereichen 8' mit einem ersten Heißsiegelklebstoff auf Lösungsmittelbasis und Bereichen 8" mit einem zweiten Heißsiegelklebstoff auf Lösungsmittelbasis besteht. Die beiden Heißsiegelklebstoffe weisen eine unterschiedliche Löslichkeit in organischen Lösungsmitteln auf.

Fig. 9c zeigt eine ähnliche Darstellung wie Fig. 9b, wobei die Manipulationsschutzschicht 70 hier jedoch aus Bereichen 9' mit einem ersten Heißsiegelklebstoff auf Wasserbasis und aus Bereichen 9" mit einem zweiten Heißsiegelklebstoff auf Wasserbasis besteht. Die beiden Heißsiegelklebstoffe weisen eine unterschiedliche Löslichkeit in wässrigen Lösungsmitteln auf.

In der Darstellung in Fig. 9d besteht die Manipulationsschutzschicht 70 ebenfalls aus zwei verschiedenen Heißsiegelklebstoffen, die jeweils strahlenvernetzbar oder in organischen Lösungsmitteln löslich oder in wässrigen Lösungsmitteln löslich sein können. Hier ist jedoch einer der Klebstoffe vollflächig auf den Schichtaufbau 4 aufgedruckt (Bereich 5), während der andere Klebstoff als streifenförmiges Motiv (Bereiche 6) auf den Bereich 5 aufgedruckt ist. Wenn es sich beispielsweise bei beiden Klebstoffen um nach dem gleichen Mechanismus strahlenhärtbare Zusammensetzungen handelt, wobei der Bereich 5 keinen Photoinitiator enthält, der Bereich 6 jedoch schon, werden bei Bestrahlung die Teilbereiche der Schicht 5, die mit dem Motiv 6 überlappen, mit ausgehärtet.

Fig. 10 zeigt ein erfindungsgemäßes Transferband 3 mit einer Vielzahl von als Transferelement ausgebildeten Sicherheitselementen während der Übertragung auf ein Substrat 2. Das Transferband besteht aus einem Trägerband 40, auf dem eine Trennschicht 41, beispielsweise aus Wachs, aufgebracht ist, worauf sich wiederum der Sicherheitselement-Schichtaufbau anschließt, und zwar in der umgekehrten Reihenfolge, wie er später auf dem Substrat vorliegen soll. Die an die Trennschicht 41 angrenzende Schicht des Schichtaufbaus 4 besteht bevorzugt aus einem thermoplastischen Material, das etwas weniger wärmeempfindlich als die Trennschicht 41 ist. Zum Aufbringen des Transferelements wird das Transferband 40, wie in Fig. 10 gezeigt, mit der Heißkleberschicht 88, die erfindungsgemäß als Manipulationsschutzschicht ausgebildet ist, auf ein Substrat 2, beispielsweise eine Kunststoffkarte, aufgelegt und angepresst. Das Anpressen erfolgt mit einem beheizten Transferstempel 42 oder alternativ auch mit einer Transferrolle. Unter der Druckund Wärmeeinwirkung verbindet sich die Heißkleberschicht 88 mit dem Substrat 2, gleichzeitig schmilzt die Trennschicht 41 und ermöglich das Abziehen der Trägerschicht 40. Die Verbindung mit dem Substrat 2 und das Abtrennen der Trägerschicht 40 erfolgt nur in den Flächenbereichen exakt unterhalb des Transferstempels, während in den nicht erhitzten Flächenbereichen der Schichtaufbau 4 und die Trägerschicht 40 fest miteinander verbunden bleiben. Der Schichtaufbau des Sicherheitselements reißt beim Abziehen der Trägerschicht 40 entlang den Konturkanten des Transferstempels 42. Daher entspricht der Umriss der auf das Substrat 2 übertragenen Transferelemente genau dem Umriss des verwendeten Transferstempels.

## Patentansprüche

1. Sicherheitselement (1) zur Verklebung mit einem Substrat (2), wie einem Sicherheitspapier, einem Wertdokument oder einem anderen Gegenstand, wobei
das Sicherheitselement (1) einen Schichtaufbau mit Manipulationsschutzmitteln aufweist, die gewährleisten, dass das Sicherheitselement (1) nach Verkleben mit dem Substrat (2) nicht mehr ohne Veränderung des Sicherheitselements (1) von dem Substrat (2) entfernbar ist,
die Manipulationsschutzmittel mindestens eine Manipulationsschutzschicht (26, 36) sind, die eine Schicht im Inneren des Schichtaufbaus des Sicherheitselements ist und zwei Schichten des Sicherheitselements miteinander verklebt, wobei
die mindestens eine Manipulationsschutzschicht (26, 36) sich in Flächenrichtung aus mindestens zwei Bereichen zusammensetzt, die sich inhärent oder nach Bestrahlung in mindestens einer der Eigenschaften Klebefähigkeit, Lösungsmittelbeständigkeit, Aushärtungsgrad und thermoplastische Eigenschaften unterscheiden, **dadurch gekennzeichnet, dass** die mindestens zwei Bereiche der Manipulationsschutzschicht (26, 36) aus mindestens zwei strahlenhärtenden Klebstoffen mit unterschiedlichen Härtungseigenschaften bestehen.

2. Sicherheitselement nach Anspruch 1, **dadurch gekennzeichnet, dass** die Veränderung des Sicherheitselements in einer mechanischen Beschädigung des Sicherheitselements besteht, oder die Veränderung des Sicherheitselements in bei Tageslicht, bei UV-Licht oder bei Temperaturveränderung sichtbaren Farbeffekten besteht.

3. Sicherheitselement nach einem der Ansprüche 1oder 2, **dadurch gekennzeichnet, dass** mindestens einer der mindestens zwei Bereiche der Manipulationsschutzschicht aus einem strahlenhärtenden Klebstoff mit Photoinitiator besteht, und mindestens einer der mindestens zwei Bereiche der Manipulationsschutzschicht aus einem strahlenhärtenden Klebstoff ohne Photoinitiator besteht.

4. Sicherheitselement nach einem der Ansprüche 1 bis 3, **dadurch gekennzeichnet, dass** der mindestens eine strahlenvernetzbare Klebstoff ausgewählt ist aus der Gruppe, die aus kationisch vernetzbaren Klebstoffen, anionisch vernetzbaren Klebstoffen, nicht ionisch vernetzbaren Klebstoffen und radikalisch vernetzbaren Klebstoffen besteht, bevorzugt aus Acrylsäureestern, Vinylethern, Epoxiden oder Polyolen.

5. Sicherheitselement nach einem der Ansprüche 1 bis 4, **dadurch gekennzeichnet, dass** die Manipulationsschutzschicht mindestens einen strahlenvernetzbaren Klebstoff aufweist, und dass in Dickenrichtung des Sicherheitselements eine Maskenschicht angeordnet ist, wobei die Maskenschicht einen oder mehrere Teilbereiche der Manipulationsschutzschicht abdeckt und in der Lage ist, Strahlung einer Wellenlänge, mit der der strahlenvernetzbare Klebstoff vernetzbar ist, zu absorbieren und/ oder zu reflektieren.

6. Sicherheitselement nach Anspruch 5, **dadurch gekennzeichnet, dass** die Maskenschicht eine teilweise demetallisierte Metallisierungsschicht, ein Aufdruck aus Metallicfarbe, ein Aufdruck aus einer Druckfarbe, die strahlungsabsorbierende und/oder strahlungsreflektierende Stoffe enthält, eine Lackschicht, die strahlungsabsorbierende und/oder strahlungsreflektierende Stoffe enthält, oder eine Kombination davon ist.

7. Sicherheitselement nach einem der Ansprüche 1 bis 6, **dadurch gekennzeichnet, dass** mindestens einer der mindestens zwei Bereiche der Manipulationsschutzschicht mindestens eine Verbindung enthält, die ausgewählt ist aus der Gruppe, die aus Farbstoffen und fluoreszierenden und/oder thermochromen Effektpigmenten besteht.

8. Sicherheitspapier für die Herstellung von Sicherheits- oder Wertdokumenten, oder Wertdokument, **dadurch gekennzeichnet, dass** es mit einem Sicherheitselement nach einem der Ansprüche 1 bis 7 ausgestattet ist.

9. Verfahren zur Herstellung eines Sicherheitselements (1) zur Verklebung mit einem Substrat (2), wie einem Sicherheitspapier, einem Wertdokument oder einem anderen Wertgegenstand, wobei
das Sicherheitselement (1) einen Schichtaufbau aufweist und nach Verkleben mit dem Substrat (2) nicht mehr ohne Veränderung des Sicherheitselements (1) von dem Substrat (2) entfernbar ist, und
das Sicherheitselement (1) mit mindestens einer Manipulationsschutzschicht (26, 36) ausgestattet wird, die in Flächenrichtung mindestens zwei Bereiche enthält, die sich inhärent oder nach Bestrahlung in mindestens einer der Eigenschaften Klebefähigkeit, Lösungsmittelbeständigkeit, Aushärtungsgrad und thermoplastischen Eigenschaften unterscheiden, und
die Manipulationsschutzschicht (26,36) als eine Schicht im Inneren des Schichtaufbaus des Sicherheitselements (1) ausgebildet wird, **dadurch gekennzeichnet, dass** die mindestens zwei Bereiche der Manipulationsschutzschicht (26, 36) aus mindestens zwei strahlenhärtenden Klebstoffen mit unterschiedlichen Härtungseigenschaften bestehen.

10. Verfahren zur Herstellung eines Sicherheitspapiers oder eines Wertdokuments nach Anspruch 8, **dadurch gekennzeichnet, dass** ein Sicherheitspapier-Substrat oder ein Wertdokument-Substrat mit einem Sicherheitselement nach einem der Ansprüche 1 bis 7 ausgestattet wird.

11. Transferband, aufweisend eine Vielzahl von auf ein Substrat, wie ein Sicherheitspapier, ein Wertdokument oder einen anderen Wertgegenstand, zu transferierenden Sicherheitselementen nach einem der Ansprüche 1 bis 7.

12. Verwendung eines Sicherheitselements nach einem der Ansprüche 1 bis 7 oder eines nach Anspruch 9 hergestellten Sicherheitselements zur Produktsicherung von Waren jeglicher Art.

## Claims

1. A security element (1) for bonding with a substrate (2), such as a security paper, a value document or other object, wherein
the security element (1) has a layer structure with tamper protection means which ensure that the security element (1) after bonding with the substrate (2) is no longer removable from the substrate (2) without changing the security element (1),
the tamper protection means are at least one tamper protection layer (26, 36) which is a layer on the inside of the layer structure of the security element and mutually bonds two layers of the security element, wherein
the at least one tamper protection layer (26, 36) in the direction of the surface consists of at least two regions which inherently or after irradiation differ from each other with respect to at least one of the properties of adhesiveness, solvent resistance, degree of curing and thermoplastic properties, **characterized in that** the at least two regions of the tamper protection layer (26, 36) consist of at least two radiation-curing adhesives with different curing properties.

2. The security element according to claim 1, **characterized in that** the change of the security element consists in a mechanical damage of security element, or the change of the security element consists in color effects visible in daylight, in UV light or upon a temperature change.

3. The security element according to any of the claims 1 or 2, **characterized in that** at least one of the at least two regions of the tamper protection layer consists of a radiation-curing adhesive with photo initiator, and at least one of the at least two regions of the tamper protection layer consists of a radiation-curing adhesive without photo initiator.

4. The security element according to any of the claims 1 to 3, **characterized in that** the at least one radiation-crosslinkable adhesive is selected from the group consisting of cationically crosslinkable adhesives, anionically crosslinkable adhesives, non-ionically crosslinkable adhesives and radically crosslinkable adhesives, preferably from acrylic acid esters, vinyl ethers, epoxides or polyols.

5. The security element according to any of the claims 1 to 4, **characterized in that** the tamper protection layer has at least one radiation-crosslinkable adhesive, and that in the direction of the thickness of the security element a mask layer is arranged, wherein said mask layer covers one or several partial regions of the tamper protection layer and is capable of absorbing and/or reflecting radiation of a wavelength at which the radiation-crosslinkable adhesive is crosslinkable.

6. The security element according to claim 5, **characterized in that** the mask layer is a partially demetalized metalization layer, a print of metallic ink, a print of a printing ink containing radiation-absorbing and/or radiation-reflecting substances, a lacquer layer containing radiation-absorbing and/or radiation-reflecting substances, or a combination thereof.

7. The security element according to any of the claims 1 to 6, **characterized in that** at least one of the at least two regions of the tamper protection layer contains at least one compound selected from the group consisting of dyes and fluorescent and/or thermochromic effect pigments.

8. A security paper for manufacturing security documents or value documents, or a value document, **characterized in that** it is equipped with a security element according to any of the claims 1 to 7.

9. A method for manufacturing a security element (1) for bonding with a substrate (2), such as a security paper, a value document or other object of value, wherein
the security element (1) has a layer structure and after bonding with the substrate (2) is no longer removable from the substrate (2) without changing the security element (1), and
the security element (1) is equipped with at least one tamper protection layer (26, 36) containing in the direction of the surface at least two regions which inherently or after irradiation differ from each other with respect to at least one of the properties of adhesiveness, solvent-resistance, degree of curing and thermoplastic properties, and
the tamper protection layer (26, 36) is formed as a layer on the inside of the layer structure of the security element (1), **characterized in that** the at least two regions of the tamper protection layer (26, 36) consist of at least two radiation-curing adhesives with different curing properties.

10. The method for manufacturing a security paper or a value document according to claim 8, **characterized in that** a security-paper substrate or a value-document substrate is equipped with a security element according to any of the claims 1 to 7.

11. A transfer band having a multiplicity of security elements according to any of the claims 1 to 7 to be transferred to a substrate, such as a security paper, a value document or other object of value.

12. Use of a security element according to any of the claims 1 to 7 or of a security element manufactured according to claim 9 for product securing of goods of any kind.

## Revendications

1. Élément de sécurité (1) destiné à être collé sur un substrat (2) tel qu'un papier de sécurité, un document de valeur ou un autre objet, cependant que
l'élément de sécurité (1) comporte une structure en couches dotée de moyens de protection contre la manipulation qui garantissent que l'élément de sécurité (1) ne peut, après le collage au substrat (2), plus être enlevé du substrat (2) sans modification de l'élément de sécurité (1),
les moyens de protection contre la manipulation sont au moins une couche de protection contre la manipulation (26, 36) qui est une couche a l'intérieur de la structure en couches de l'élément de sécurité et colle l'une à l'autre deux couches de l'élément de sécurité, cependant que
la au moins une couche de protection contre la manipulation (26, 36) se compose, dans le sens de la surface, d'au moins deux zones qui, de manière inhérente ou après irradiation, se différencient en au moins une des propriétés adhésivité, résistance aux solvants, degré de durcissement et propriétés thermoplastiques, **caractérisé en ce que** les au moins deux zones de la couche de protection contre la manipulation (26, 36) consistent en au moins deux colles durcissant par irradiation à propriétés de durcissement différentes.

2. Élément de sécurité selon la revendication 1, **caractérisé en ce que** la modification de l'élément de sécurité consiste en une détérioration mécanique de l'élément de sécurité, ou **en ce que** la modification de l'élément de sécurité consiste en des effets de couleur visibles à la lumière du jour, à la lumière UV ou lors d'une modification de température.

3. Élément de sécurité selon une des revendications 1 ou 2, **caractérisé en ce qu'**au moins une des au moins deux zones de la couche de protection contre la manipulation consiste en une colle durcissant par irradiation avec photoinitiateur, et **en ce qu'**au moins une des au moins deux zones de la couche de protection contre la manipulation consiste en une colle durcissant par irradiation sans photoinitiateur.

4. Élément de sécurité selon une des revendications de 1 à 3, **caractérisé en ce que** la au moins une colle réticulable par irradiation est choisie dans le groupe constitué de colles réticulables de façon cationique, de colles réticulables de façon anionique, de colles réticulables de façon non ionique et de colles réticulables de façon radicalaire, de préférence en esters d'acide acrylique, éthers vinyliques, époxydes ou polyols.

5. Élément de sécurité selon une des revendications de 1 à 4, **caractérisé en ce que** la couche de protection contre la manipulation comporte au moins une colle réticulable par irradiation, et **en ce que**, dans le sens de l'épaisseur de l'élément de sécurité, une couche de masquage est agencée, la couche de masquage recouvrant une ou plusieurs zones partielles de la couche de protection contre la manipulation et étant en mesure d'absorber et/ou de réfléchir une radiation d'une longueur d'onde à laquelle la colle réticulable par irradiation est réticulable.

6. Élément de sécurité selon la revendication 5, **caractérisé en ce que** la couche de masquage est une couche de métallisation partiellement démétallisée, une impression en encre métallique, une impression en encre d'impression contenant des substances absorbant la radiation et/ou réfléchissant la radiation, une couche de vernis contenant des substances absorbant la radiation et/ou réfléchissant la radiation, ou une combinaison de ceci.

7. Élément de sécurité selon une des revendications de 1 à 6, **caractérisé en ce qu'**au moins une des au moins deux zones de la couche de protection contre la manipulation comporte au moins un composé choisi dans le groupe constitué de colorants et de pigments fluorescents et/ou thermochromiques à effets.

8. Papier de sécurité destiné à la fabrication de documents de sécurité et/ou de valeur, ou document de valeur, **caractérisé en ce qu'**il est équipé d'un élément de sécurité selon une des revendications de 1 à 7.

9. Procédé de fabrication d'un élément de sécurité (1) destiné à être collé sur un substrat (2) tel qu'un papier de sécurité, un document de valeur ou un autre objet de valeur, cependant que
l'élément de sécurité (1) comporte une structure en couches et ne peut, après le collage au substrat (2), plus être enlevé du substrat (2) sans modification de l'élément de sécurité (1),
l'élément de sécurité (1) est équipé d'au moins une couche de protection contre la manipulation (26, 36) qui, dans le sens de la surface, comporte au moins deux zones qui, de manière inhérente ou après irradiation, se différencient en au moins une des propriétés adhésivité, résistance aux solvants, degré de durcissement et propriétés thermoplastiques, et
la couche de protection contre la manipulation (26, 36) est réalisée en tant qu'une couche a l'intérieur de la structure en couches de l'élément de sécurité (1), **caractérisé en ce que** les au moins deux zones de la couche de protection contre la manipulation (26, 36) consistent en au moins deux colles durcissant par irradiation à propriétés de durcissement différentes.

10. Procédé de fabrication d'un élément de sécurité ou d'un document de valeur selon la revendication 8, **caractérisé en ce qu'**un substrat pour papier de sécurité ou un substrat pour documents de valeur est équipé d'un élément de sécurité selon une des revendications de 1 à 7.

11. Bande de transfert comportant une pluralité d'éléments de sécurité selon une des revendications de 1 à 7 à transféré sur un substrat tel qu'un papier de sécurité, un document de valeur ou un autre objet de valeur.

12. Utilisation d'un élément de sécurité selon une des revendications de 1 à 7 ou d'un élément de sécurité fabriqué selon la revendication 9 pour la sécurisation produit de marchandises de toute nature.
